(19) Europäisches Patentamt
European Patent Office
Office européen des brevets

(11) **EP 4 485 009 A1**

(12) **EUROPEAN PATENT APPLICATION**

(43) Date of publication:
**01.01.2025 Bulletin 2025/01**

(21) Application number: **23182582.9**

(22) Date of filing: **30.06.2023**

(51) International Patent Classification (IPC):
**G01S 19/07** $^{(2010.01)}$ **G01C 15/00** $^{(2006.01)}$
**G01S 19/03** $^{(2010.01)}$

(52) Cooperative Patent Classification (CPC):
**G01S 19/073; G01C 21/38;** G01S 19/03

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Trimble Inc.**
**Westminster, CO 80021 (US)**

(72) Inventors:
• **Rexer, Moritz**
**85635 Höhenkirchen-Siegertbrunn (DE)**
• **Rodriguez-Solano, Carlos**
**85635 Höhenkirchen-Siegertbrunn (DE)**
• **Chen, Xiaoming**
**85635 Höhenkirchen-Siegertbrunn (DE)**

(74) Representative: **Hoffmann Eitle**
**Patent- und Rechtsanwälte PartmbB**
**Arabellastraße 30**
**81925 München (DE)**

(54) **METHODS AND SYSTEMS FOR PROVIDING GEODETIC DATUM TRANSFORMATION INFORMATION FOR POSITIONING PURPOSES**

(57) The invention relates to methods for providing geodetic datum transformation information applicable to a region of the Earth, for use by a navigation satellite system (NSS) receiver and/or a processing entity capable of receiving data therefrom. In one embodiment, the method comprises: generating (s10a) similarity transformation parameters and, for each of a plurality of reference stations in the region, post-fit transformation residuals applicable to the reference station; and sending (s20a) the transformation parameters and output residuals applicable to output points, wherein an output residual is one of the post-fit transformation residuals or derived therefrom; and the distribution of the output points in the region depends on the distribution of the reference stations. The invention also relates to variants of the above-mentioned method, to methods for receiving and processing the geodetic datum transformation information, and to systems, computer programs, and computer program products for carrying out such methods.

s10a
generating 2D or 3D similarity transformation parameters for a geodetic transformation from a global frame to a local frame and, for each of a plurality of reference stations in the region, post-fit transformation residuals applicable to the reference station

s20a
sending the similarity transformation parameters and, for each of a plurality of output points of the region, output residuals applicable to the output point

Fig. 1

EP 4 485 009 A1

**Description**

**[Field of technology]**

The invention relates to methods, systems, devices, and computer programs for providing, receiving, and processing geodetic datum transformation information applicable to a region of the Earth, for example for positioning purposes. The fields of application of the methods, systems, devices, and computer programs include, but are not limited to, geospatial positioning, navigation, highly automated driving, autonomous driving, mapmaking, land surveying, civil engineering, construction, agriculture, disaster prevention and relief, and scientific research.

**[Background]**

Navigation satellite systems (NSS) include both global navigation satellite systems (GNSS) and regional navigation satellite systems (RNSS), such as the Global Positioning System (GPS) (United States), GLONASS (Russia), Galileo (Europe), BDS (China), QZSS (Japan), and the Indian Regional Navigational Satellite System (IRNSS, also referred to as NAVIC) (systems in use or in development). An NSS typically uses a plurality of satellites orbiting the Earth. The plurality of satellites forms a constellation of satellites. An NSS receiver detects a code modulated on an electromagnetic signal broadcast by a satellite. The code is also called a ranging code. Code detection includes comparing the bit sequence modulated on the broadcasted signal with a receiver-side version of the code to be detected. Based on the detection of the time of arrival of the code for each of a series of the satellites, the NSS receiver estimates its position. Positioning includes, but is not limited to, geolocation, i.e. the positioning on the surface of the Earth.

An overview of GPS, GLONASS, and Galileo is provided for example in sections 9, 10, and 11 of ref. [1] (a list of references is provided at the end of the present description, after a list of abbreviations and acronyms).

Positioning using NSS signal codes provides a limited accuracy, notably due to the distortion the code is subject to upon transmission through the atmosphere. For instance, the GPS includes the transmission of a coarse/acquisition (C/A) code at about 1575 MHz, the so-called L1 frequency. This code is freely available to the public, whereas the Precise (P) code is reserved for military applications. The accuracy of code-based positioning using the GPS C/A code is approximately 15 meters, when considering both the electronic uncertainty associated with the detection of the C/A code (electronic detection of the time of arrival of the pseudorandom code) and other errors including those caused by ionospheric and tropospheric effects, ephemeris errors, satellite clock errors, and multipath propagation.

The carrier signals transmitted by the NSS satellites can also be tracked to provide an alternative, or complementary, means of determining the range, or change in range between the receiver and satellite. Carrier phase measurements from multiple NSS satellites facilitate estimation of the position of the NSS receiver.

The approach based on carrier phase measurements has the potential to provide much greater position precision, i.e. down to centimetre-level or even millimetre-level precision, compared to the code-based approach. The reason may be intuitively understood as follows. The code, such as the GPS C/A code on the L1 band, has an effective chip length that is much longer than one cycle of the carrier on which the code is modulated. Code and carrier phase measurements have precisions that are roughly the same fraction of the respective chip length or wavelength. The position resolution may therefore be viewed as greater for carrier phase detection than for code detection.

However, in the process of estimating the position based on carrier phase measurements, the carrier phases are ambiguous by an unknown number of cycles. The fractional phase of a received signal can be determined but the additional number of cycles required to determine the satellite's range cannot be directly determined in an unambiguous manner. This is the so-called "integer ambiguity problem", "integer ambiguity resolution problem", or "phase ambiguity resolution problem", which may be solved to yield the so-called fixed-ambiguity solution (sometimes referred to simply as the fixed solution).

GNSS observation equations for code observations and for carrier phase observations are for instance provided in ref. [1], section 5. An introduction to the GNSS integer ambiguity resolution problem, and its conventional solutions, is provided in ref. [1], section 7.2. The person skilled in the art will recognize that the same or similar principles apply to RNSS.

The main GNSS observables are therefore the carrier phase and code (pseudorange), the former being generally much more precise than the latter, but ambiguous. These observables enable a user to obtain the geometric distance from the receiver to the satellite. With known satellite position and satellite clock error, the receiver position and receiver clock error can be estimated.

As mentioned above, the GPS includes the transmission of a C/A code at about 1575 MHz, the so-called L1 frequency. More precisely, each GPS satellite transmits continuously using two radio frequencies in the L-band, referred to as L1 and L2, at respective frequencies of 1575.42 MHz and 1227.60 MHz. With the ongoing modernization of the GPS, signals on a third L5 frequency are becoming available. Among the two signals transmitted on L1, one is for civil users and the other is for users authorized by the United States Department of Defense (DoD). Signals are also transmitted on L2, for civil users and DoD-authorized users. Each GPS signal at the L1 and L2 frequencies is modulated with a pseudo-random noise (PRN) code, and optionally with satellite navigation data. When GNSS satellites broadcast signals that do not contain navigation data, these signals are sometimes termed "pilot" signals, or "data-free" signals. In relation to GPS, two different PRN codes are transmitted by each satellite: a C/A code and a P code which is encrypted for DoD-authorized users to become a Y code. Each C/A code is a unique sequence of 1023 bits, which is repeated each millisecond. Other NSS systems also have satellites transmitting multiple signals on multiple carrier frequencies.

A global network of NSS reference stations may also be used to compute and provide correction information to NSS receivers (users) in the field. The correction information may for example comprise precise information about satellite orbits, satellite clocks, and ionosphere- and troposphere-induced delays or errors. The correction information provided to the NSS receivers may enable those to resolve the integer ambiguities so as to yield a fixed solution. These systems are known in the art as precise point positioning (PPP) or precise point positioning real-time kinematic (PPP-RTK) systems or services.

The correction information supporting PPP-RTK systems and services is often generated in coordinates of a global reference frame such as an International Terrestrial Reference Frame (ITRF). Deformation of the Earth's surface as a result of, for example, plate tectonics requires, however, the use of a kinematic (i.e., dynamic) realization of the ITRF, which increases the processing load on the NSS receiver side. A geodetic datum transformation from a global datum to a local datum may therefore be desirable, so that the NSS receivers can process and present their results in coordinates of a local datum (see ref. [2], section 3.5.10.1, first paragraph). To this end, it is known to transmit "RTCM messages that contain transformation data and information about the Coordinate Reference Systems" (ref. [2], section 3.5.10.1, third paragraph).

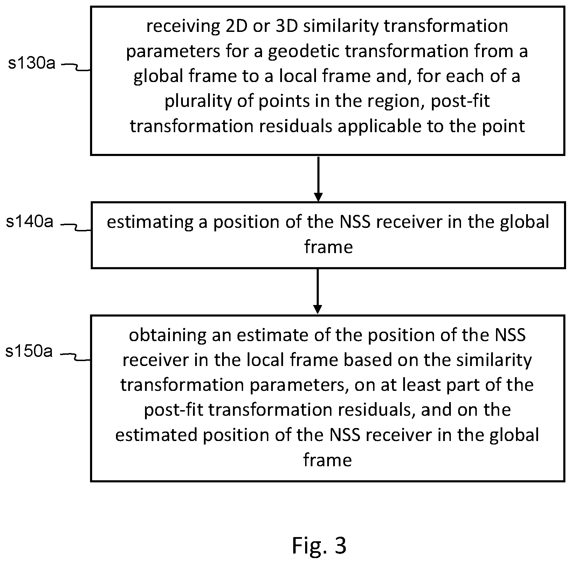

More specifically, ref. [2] defines seven message types in support of the application of coordinate transformations, namely Message Types 1021 through 1027 (ref. [2], section 3.5.10.4, first paragraph). Message Type 1021 provides the basic transformation parameters, and "Message Types 1023 and 1024 define the residuals for ellipsoidal and plane grid representations, respectively" (ibid.). Ref. [2], section 3.5.10.4, Figure 3.5-4, also shows a grid definition for residual messages.

There is a constant need for improving the implementation of positioning or similar systems making use of NSS observables, and, in particular, systems involving the transmission of geodetic datum transformation information to NSS receivers and the like.

**[Summary]**

The present invention aims at addressing the above-mentioned need. The invention includes methods, systems, computer programs, computer program products, and storage mediums as defined in the independent claims. Particular embodiments are defined in the dependent claims.

In one embodiment, a method aims at providing geodetic datum transformation information applicable to a region of the Earth, the provided geodetic datum transformation information being suitable for use by (i) a NSS receiver, and/or (ii) a processing entity capable of receiving data from the NSS receiver. The method comprises the following operations. Two- or three-dimensional similarity transformation parameters for a geodetic transformation from a first reference frame, hereinafter referred to as "global frame", to a second reference frame, hereinafter referred to as "local frame", and, for each of a plurality of reference stations in the region, post-fit transformation residuals applicable to the reference station, are generated based on coordinates, in the global frame, of the reference stations and on coordinates, in the local frame, of the reference stations. Then, the similarity transformation parameters and, for each of a plurality of points, hereinafter referred to as "output points", of the region, residuals, hereinafter referred to as "output residuals", applicable to the output point are sent. An output residual is either one of the generated post-fit transformation residuals or is derived from (e.g., by interpolation or averaging) generated post-fit transformation residuals applicable to at least two of the reference stations. Further, the distribution of the output points in the region depends on the distribution of the reference stations in the region.

In one embodiment, a method aims at providing geodetic datum transformation information applicable to a region of the Earth, the provided geodetic datum transformation information being suitable for use by (i) a NSS receiver, and/or (ii) a processing entity capable of receiving data from the NSS receiver. The method comprises the following operations. For each of a plurality of reference stations in the region, at least one transformation offset applicable to the reference station, for a geodetic transformation from a first reference frame, hereinafter referred to as "global frame", to a second reference frame, hereinafter referred to as "local frame", is generated based on coordinates, in the global frame, of the reference stations and on coordinates, in the local frame, of the reference stations. Then, for each of a plurality of points, hereinafter referred to as "output points", of the region, offsets, hereinafter referred to as "output offsets", are sent. An output offset is either one of the generated transformation offsets or is derived from (e.g., by interpolation or averaging) generated transformation offsets applicable to at least two of the reference stations. Further, the distribution of the output points in the region depends on the distribution of the reference stations in the region.

In one embodiment, a method is carried out by (i) a NSS receiver, and/or (ii) a processing entity capable of receiving data from the NSS receiver, for receiving and processing geodetic datum transformation information applicable to a region of the Earth. The method comprises the following operations. Two- or three-dimensional similarity transformation parameters for a geodetic transformation from a first reference frame, hereinafter referred to as "global frame", to a second reference frame, hereinafter referred to as "local frame", and, for each of a plurality of points in the region, post-fit transformation residuals applicable to the point are received. The distribution of the points in the region is not uniform. A position of the NSS receiver in the global frame is estimated. Then, an estimate of the position of the NSS receiver in the local frame is obtained based on the similarity transformation parameters, on at least part of the post-fit transformation residuals, and on the estimated position of the NSS receiver in the global frame.

In one embodiment, a method is carried out by (i) a NSS receiver, and/or (ii) a processing entity capable of receiving data from the NSS receiver, for receiving and processing geodetic datum transformation information applicable to a region of the Earth. The method comprises the following operations. For each of a plurality of points in the region, at least one transformation offset for a geodetic transformation from a first reference frame, hereinafter referred to as "global frame", to a second reference frame, hereinafter referred to as "local frame", is received. The distribution of the points in the region is not uniform. A position of the NSS receiver in the global frame is estimated. Then, an estimate of the position of the NSS receiver in the local frame is obtained based on at least part of the transformation offsets, and on the estimated position of the NSS receiver in the global frame.

The methods in the above-described embodiments create the ability to provide geodetic datum transformation information in an efficient manner in terms of payload and/or information content of the signal(s) used for transmission of the geodetic datum transformation information and thus also in terms of bandwidth needed to do so.

The invention also relates, in some embodiments, to systems configured to carry out any one of the above-described methods. In one embodiment, a vehicle comprises such a system. In one embodiment, a mobile device comprises such a system.

In some embodiments, computer programs, computer program products and/or storage media for storing such computer programs are provided. Such computer programs comprise computer-executable instructions configured for carrying out, when executed on a computer such as one embedded in, or otherwise part of, a NSS receiver or in another apparatus or device, or when executed on a set of computers such as a set of computers embedded in, or otherwise part of, a set of apparatuses or devices, any one of the above-described methods.

**[Brief description of the drawings]**

Embodiments of the present invention shall now be described, in conjunction with the appended drawings in which:

Fig. 1 is a flowchart of a method in one embodiment of the invention, notably involving generating similarity transformation parameters and post-fit transformation residuals;

Fig. 2 is a flowchart of a method in one embodiment of the invention, notably involving generating transformation offset(s);

Fig. 3 is a flowchart of a method in one embodiment of the invention, notably involving receiving similarity transformation parameters and post-fit transformation residuals;

Fig. 4 is a flowchart of a method in one embodiment of the invention, notably involving receiving transformation offset(s);

Figs. 5, 6a to 6e, and 7 schematically illustrate principles underlying an exemplary encoding of output residuals as a sparse quadtree data structure, in one embodiment of the invention;

Fig. 8 schematically illustrates a quadtree definition in one embodiment of the invention;

Figs. 9 and 10 schematically illustrate the encoding of an exemplary grid of output residuals as a sparse quadtree data structure, in one embodiment of the invention;

Fig. 11a schematically illustrates the generation, on a network side, of a uniform grid of interpolated residuals, in accordance with a non-claimed reference implementation;

Fig. 11b schematically illustrates the interpolation, on the NSS receiver side, of residuals from a received grid of residuals, in accordance with a non-claimed reference implementation corresponding to that of Fig. 11a;

Fig. 12a schematically illustrates the generation, on a network side, of output points for transmitting post-fit transformation residuals or transformation offsets corresponding to the output points, in one embodiment of the invention;

Fig. 12b schematically illustrates the interpolation, on the NSS receiver side, of residuals or transformation offsets from a received data structure associated with output points, in an embodiment corresponding to the embodiment of Fig. 12a;

Fig. 13 shows local datum transformation residuals (horizontal component) for reference stations spread through Germany;

Fig. 14 shows local datum transformation residuals (vertical component) for reference stations spread through Germany;

Fig. 15 is a flowchart of a method in one embodiment of the invention, notably involving sending similarity transformation parameters, post-fit transformation residuals, and a set of quality indicators (QI);

Fig. 16 is a flowchart of a method in one embodiment of the invention, notably involving sending transformation offset(s) and a set of QIs;

Fig. 17 is a flowchart of a process of generating a set of QIs in a method according to one embodiment of the invention;

Fig. 18 schematically illustrates a network-side system in one embodiment of the invention; and

Fig. 19 schematically illustrates an NSS-receiver-side system in one embodiment of the invention.

**[Detailed description]**

The present invention shall now be described in conjunction with specific embodiments. These serve to provide the skilled person with a better understanding but are not intended to in any way restrict the scope of the invention, which is defined by the appended claims. In particular, the embodiments described throughout the description can be combined to form further embodiments to the extent that they are not mutually exclusive.

Throughout the following description, the abbreviation "GNSS" is sometimes used. The invention is, however, not limited to global navigation satellite systems (GNSS) but also applies to regional navigation satellite systems (RNSS). Thus, it is to be understood that each occurrence of "GNSS" in the following can be replaced with "RNSS" to form additional embodiments.

In the art, the term "observables" is often used to refer to structures of an NSS signal from which observations or measurements can be made (PRN-code, carrier phase, Doppler, SNR) (see e.g. ref. [7]: "The word observable is used throughout GPS literature to indicate the signals whose measurement yields the range or distance between the satellite and the receiver."). However, in common usage, and in the present document, the term "observable" (also referred to as "NSS observable") is also interchangeably used to refer to the observation itself, such that, for example, "carrier phase observable" has the same meaning as "carrier phase observation". Further, when the present document describes that an NSS signal is observed, this means that at least an observation (measurement) of at least an observable of the NSS signal is made.

When the term "real-time" is used in the present document, it means that there is an action (e.g., data is processed or transmitted, results are computed) as soon as the required information for that action is available. Thus, certain latency exists, which depends on various aspects depending on the involved component(s) of the system.

When the verb "broadcast" (and "broadcasting", etc.) is used, this also covers embodiments where the transmission is a form of multicasting.

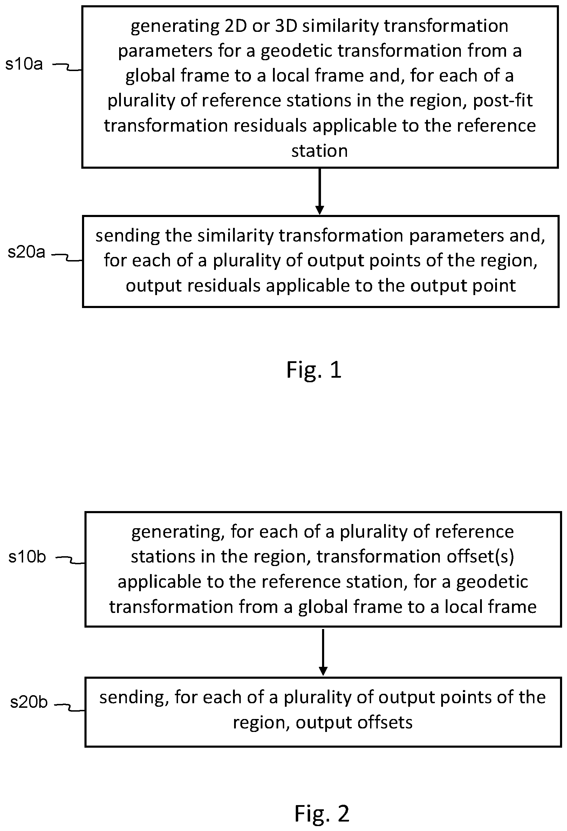

Fig. 1 is a flowchart of a method in one embodiment of the invention, for providing geodetic datum transformation information applicable to a region of the Earth. The geodetic datum transformation information is suitable for use by a NSS receiver (which will be described below with reference to Fig. 3) and/or a processing entity capable of receiving data from the NSS receiver. The method illustrated in Fig. 1 may be carried out by one or more computers and/or servers, or more generally by any number of processing entities implemented in hardware, firmware, and/or software. In one embodiment, the method is partially or fully carried out in the cloud, i.e. by any number of processing entities in the cloud.

Geodetic datum transformation information means here information that at least represents a relationship, at one point in time, from one geodetic datum to another geodetic datum. Thus, geodetic datum transformation information enables to transform the coordinates of a point in a first coordinate frame, such as in a global coordinate system, to the coordinates of the same point in a second coordinate frame, such as in a local coordinate system. In the art, a geodetic datum transformation is sometimes also called simply "datum transformation" (see for example ref. [1], p. 293). The geodetic datum transformation may for example be represented as follows:

$$XYZ_{global\ datum}(t_{current}) \rightarrow XYZ_{local\ datum}(t_{reference})$$

wherein

$t_{current}$ is the current time expressed in a time system associated with the global coordinate system;

$t_{reference}$ is the current time expressed in a time system associated with the local coordinate system;

$XYZ_{global\ datum}(t_{current})$ are the coordinates of a point in the global coordinate system at time $t_{current}$; and

$XYZ_{local\ datum}(t_{reference})$ are the coordinates of the same point in the local coordinate system at time $t_{reference}$.

The term "providing" means here sending the geodetic datum transformation information, i.e. transmitting, broadcasting or otherwise making the geodetic datum transformation information available, to one or more NSS receivers and/or one or more processing entities capable of receiving data from one or some of the NSS receiver(s). The geodetic datum transformation information is suitable for use by a NSS receiver and/or a processing entity capable of receiving data therefrom in that the NSS receiver and/or the processing entity, whichever is applicable, can use the information for carrying out a geodetic datum transformation.

The region of the Earth to which the geodetic datum transformation information is applicable is a portion of the Earth's surface over which the geodetic datum transformation information is considered to be valid. In one embodiment, a region corresponds to a tectonic plate or to a portion of a tectonic plate (e.g., a minor plate, microplate, or a portion thereof) that has similar dynamical properties throughout the region. In this embodiment, the similarity transformation parameters (which are further discussed below) are useful for, and may eventually be used for, both transitioning between reference frames and accounting implicitly for plate and/or crustal motion while minimizing the residuals. For example, the region may, in one embodiment, roughly correspond to a country such as Germany, France, Spain, or the U.S., or to a U.S. state, or to a continent such as Europe.

It is further noted that the invention is not limited to embodiments in which similarity transformation parameters are used for implicitly accounting for plate and/or crustal motion. That is, in some embodiments, the plate and/or crustal motion part may be separated from the reference frame transition part by applying a plate/crustal motion model in a first step ($XYZ_{global\ datum}(t_{current}) \rightarrow XYZ_{global\ datum}(t_{reference})$) and then generating the similarity transformation parameters in a second step ($XYZ_{global\ datum}(t_{reference}) \rightarrow XYZ_{local\ datum}(t_{reference})$). This necessitates the plate and/or crustal motion model to be known or sent (or otherwise provided) to the NSS receiver in addition to the similarity transformation parameters. For example, plate and/or crustal motion models may be described by a rotation velocity around an Euler pole (in terms of three Euler rotation parameters).

In step s10a, two- or three-dimensional similarity transformation parameters and post-fit transformation residuals are generated based on known coordinates at one point in time, in a first reference frame (i.e., the source frame), here referred to as a "global frame", of a plurality of reference stations and on known coordinates at the same point in time, a second reference frame (i.e., the destination frame), here referred to as a "local frame", of the reference stations. In one embodiment, the plurality of reference stations comprises at least three reference stations. Preferably, the plurality of reference stations comprises at least 10 reference stations. Most preferably, the plurality of reference stations comprises at least 100 reference stations. In one embodiment, there are between 1 and 15 reference stations per 10000 km$^2$ (square kilometres) in the region.

Specifically, the two- or three-dimensional similarity transformation parameters may represent a geodetic transformation from the global frame to the local frame, i.e. a transformation model.

In one embodiment, the global frame is a terrestrial reference frame, such as, but not limited to, an International Terrestrial Reference Frame (ITRF), a Galileo Terrestrial Reference Frame (GTRF), or a BeiDou Terrestrial Reference Frame (BTRF). The global frame may be other globally defined terrestrial frames defined by geodetic space observation techniques and co-rotating with the Earth, such as an Earth-centered, Earth-fixed coordinate system (ECEF), the ITRF realisations defined by the ITRS, or other terrestrial frames. For more explanations about terrestrial reference frames in general, see for example ref. [8].

In one embodiment, the local frame is a reference frame attached to, or intended to be attached to, a portion of a tectonic plate (e.g., a minor plate, microplate, or a portion thereof), i.e. a reference frame moving, or intended to be moving, together with that portion of the tectonic plate. This means that the reference stations are also moving with the plate, and that the transformation parameters also change over time. The local frame may for example cover a German state such as Bavaria, or may, as other examples, cover a farm or a construction site, each with their own local frame definition.

How to determine, i.e. generate, three-dimensional (3D) similarity transformation parameters from common (identical) points -here: the reference stations- is known from e.g. ref. [1], pp. 293-297, section 8.3.1, and is not repeated here. In one embodiment, the similarity transformation parameters are Helmert parameters. Helmert parameters represent a geometric transformation within a three-dimensional space. In one embodiment, the Helmert parameters comprise seven parameters, i.e. three translations (each for example expressed in metre), one scaling (for example expressed in ppm), and three rotations (each for example expressed in arcsecond), under the underlying assumption that the scaling is uniform in all directions and that the axes of the frame are perpendicular. The invention is, however, not limited to the use of Helmert parameters. Other similarity transformations may be used, such as a 9-parameter transformation or a 12-parameter (affine) transformation. The number of similarity transformation parameters, when this number is sufficiently large, does not depend on the number of reference stations. That is, as a skilled person would recognize, a minimum number of reference stations may however be needed depending on how the similarity transformation parameters are generated. For example, if generating the similarity transformation parameters involves or comprises a least-squares adjustment (this possibility is discussed below), at least as many coordinates (XYZ) as unknowns may be needed. In such an exemplary case, for 7 and 9 parameters (i.e., unknowns), at least three reference stations (i.e., 9 coordinates) are needed, and, for 12 parameters (i.e., unknowns), four reference stations (i.e., 12 coordinates) are needed.

How to determine, i.e. generate, two-dimensional (2D) similarity transformation parameters from common points is known from e.g. ref. [1], pp. 297-300, section 8.3.2. In one embodiment, the two-dimensional similarity transformation parameters comprise five parameters, i.e. two translations, one scaling, and two rotations.

In one embodiment, generating s10a the similarity transformation parameters comprises a least-squares adjustment. The invention is, however, not limited to the use of a least-squares adjustment. Other types of regression may be used instead, such as a least absolute deviation (LAD) regression or other robust regressions.

As mentioned above, in step s10a, not only 2D or 3D similarity transformation parameters are generated but also post-fit transformation residuals. Namely, for each of a plurality of reference stations -the position thereof being known- in the region, post-fit transformation residuals applicable to the reference station are generated. That is, the number of post-fit transformation residuals depends on the number of reference stations, i.e. there is a set of post-fit transformation residuals (e.g., three residuals) per reference station. The post-fit transformation residuals represent the differences (i.e., the rest errors) between the position of the reference stations in the local frame as computed by applying the similarity transformation parameters and the known position of the reference stations. Post-fit transformation residuals exist because the model represented by, for example, Helmert parameters generally does not fit optimally the position of the reference stations. Transmitting both similarity transformation parameters and post-fit transformation residuals is thus beneficial in terms of accuracy. The post-fit transformation residuals for a point may for example comprise three values, i.e. east, north, and up. Other sets of values may alternatively be used, such as for example XYZ values in a Cartesian coordinate system, or ellipsoidal coordinates values in an ellipsoidal coordinate system.

As mentioned in the above "Background" section, being able to perform a geodetic datum transformation from a global datum to a local datum is beneficial in that the NSS receivers can process and present their results in coordinates of a local datum. The benefit of having the position given in the local frame and at a specific, fixed epoch is also that the measured points need not be updated continuously. As the local frame may also typically be fixed to the stable part of a tectonic plate, i.e. it may move with the plate and thus the coordinates in the local frame may generally be more stable over time than in a global frame.

In step s20a, the similarity transformation parameters -generated in above-discussed step s10a- and, for each of a plurality of points, here referred to as "output points", of the region, residuals, here referred to as "output residuals", applicable to the output point are sent, i.e. transmitted, broadcast or otherwise made available, to one or more NSS receivers and/or one or more processing entities capable of receiving data from one or some of the NSS receiver(s).

Specifically, an output residual is either one of the generated post-fit transformation residuals -i.e., generated in above-discussed step s10a- or is derived from (e.g., by interpolation or averaging) generated post-fit transformation residuals applicable to at least two of the reference stations. For example, if the density of reference stations in a sub-region of the region is higher than a threshold, rather than sending the post-fit transformation residuals generated for each of the reference stations in the sub-region, a point (an output point) in the vicinity of a plurality of reference stations in the sub-region may be selected and post-fit transformation residuals may be generated, i.e. derived, for that output point by, for example, interpolating the post-fit transformation residuals generated for some reference stations in the vicinity of the output point. This allows a reduction of the amount of transmitted information.

An output point that does not necessarily correspond to a reference station may also be selected so that its coordinates can be represented in a memory- and/or payload-efficient manner, e.g. with a low number of bits. For example, coordinates of a spatial grid or mesh may be sent or taken (i.e., agreed upon), and an output point may be selected as an intersection of three or more cells of the grid or mesh, as the centre of a cell of the grid or mesh, or the like. The post-fit transformation residuals for the output point may then be derived for that output point as described above, e.g. by interpolating the post-fit transformation residuals generated for reference stations in the vicinity of the output point.

Further, in the embodiment illustrated in Fig. 1, the distribution of the output points in the region under consideration depends on the distribution of the reference stations therein. That is, the output points are not distributed uniformly within the region but are distributed in a manner that is adaptive to the locations of the reference stations, especially adaptive to a network of non-uniformly located reference stations. A regular, uniform grid of output points is not used but output points are positioned in the region depending on the position of the reference stations in the region. This is beneficial in that, if there are only a few reference stations in a sub-region of the region, it is more efficient, for that sub-region, to let the processing entity on the NSS receiver side (i.e., the NSS receiver or a processing entity associated therewith) perform the interpolation process than to send many "artificial" output points (i.e., output points for which the interpolation is performed on the network side). In such a manner, the payload of the broadcast signal can be reduced. In other words, the above-described method creates the ability to provide geodetic datum transformation information in an efficient manner in terms of payload and/or information content of the signal(s) used for transmission of the geodetic datum transformation information and thus also in terms of bandwidth needed to do so. In turn, this enables the geodetic datum transformation information to reach the users (i.e., on the NSS receiver side) as quickly as possible. In one embodiment, the geodetic datum transformation information is generated continuously and provided in real-time by a network of reference stations.

In one embodiment, the distribution of the output points in the region depends on the distribution of the reference stations in the region in that there is at least a first sub-region of the region in which the average distance between adjacent reference stations is greater than in a second sub-region of the region; and the average distance between output points is greater in the first sub-region than in the second sub-region.

The output residuals may be transmitted using, for example, a quadtree data structure (as will be described further below). The invention is not limited to using a quadtree data structure, however. Other data structures may be used.

The broadcasting or transmission, i.e. sending step s20a, may for example be carried out in the form of data packets, such as IP packets, through, for example, any one of, or a combination of, a local area network (LAN), the Internet, a cellular network, and a suitable satellite link (e.g., L-Band). The person skilled in the art would, however, appreciate that other transmission protocols (e.g., HTTPS) and other forms of wired or wireless transmission may be used, such as, and without being limited to, wireless transmissions involving Bluetooth, Wi-Fi, or Li-Fi. In one embodiment, the data is transmitted as a data stream in that messages containing said data are transmitted at regular or irregular intervals through the same communication medium or channel. A plurality of parallel data streams may be used as well, for example one stream per region, i.e. a first stream providing geodetic datum transformation information for a first region, a second stream providing geodetic datum transformation information for a second region, etc. Further, the data may be encoded and/or encrypted prior to transmission, and it may transit through any number of intermediate computers or other processing entities.

The similarity transformation parameters and output residuals may be sent periodically or aperiodically. In one embodiment, the similarity transformation parameters and output residuals are sent every $m$ hour(s), wherein $m$ is a number selected within the range from 0.25 to 1440, preferably a number selected within the range from 0.5 to 720. Such a frequency of transmission of the similarity transformation parameters and output residuals may be appropriate from the perspective of actual changes in the transformation model (i.e., "how often is it necessary to update/recalculate the transformation parameters?"), and this frequency of transmission may consequently be appropriate for already operating NSS receivers (e.g., if only already operating NSS receivers are to be served). However, it may be desirable in some context to serve around the clock (24/7) every user who may start his or her NSS receiver in the field. For these users, it may not be acceptable or practicable to wait for some hours or even for minutes. In other words, the transformation information should reach the NSS receiver at the moment it is started or at least shortly thereafter. Thus, in another embodiment, the similarity transformation parameters and output residuals are sent at a higher rate than the above-mentioned frequency, i.e. every 0.25 hour or at a higher frequency. In one embodiment, the similarity transformation parameters and output residuals are sent every m'second(s), wherein $m'$ is a number selected within the range from 1 to 90, preferably a number selected within the range from 2 to 60.

In one embodiment, the similarity transformation parameters and output residuals are transmitted together with correction information, for example as part of a correction stream (in that respect, see e.g. refs. [3] to [6]). In one embodiment, the correction stream may be regionalized in that it applies to a region of the Earth's surface. For example, a country-scale correction stream, such as country-scale PPP correction stream, may be broadcast. The compactness of the similarity transformation parameters and output residuals, as described above, lends itself well to broadcasting in a correction stream, which should typically be received as quickly as possible at the NSS receiver side.

In one embodiment, the similarity transformation parameters and output residuals are transmitted over a one-way (i.e., unidirectional) channel from the network side to the NSS receiver side, i.e. not requiring a communication channel from the NSS receiver side (back) to the network side and therefore not requiring a transmitter at the NSS receiver. This differs from some virtual reference station (VRS) system requiring the rover (i.e., a form of NSS receiver) to communicate its approximate position to the network. A unidirectional broadcast service is beneficial in that there is no limit to the number of users that can be served.

Fig. 2 is a flowchart of a method in another embodiment of the invention, also for providing geodetic datum transformation information applicable to a region of the Earth. Specifically, the method illustrated in Fig. 2 differs from the method illustrated in Fig. 1 in that, rather than generating s10a 2D or 3D similarity transformation parameters and post-fit transformation residuals and sending s20a the similarity transformation parameters and output residuals for each of a plurality of output points of the region (as discussed above with reference to Fig. 1), the similarity transformation parameters are not generated and the transformation offsets occurring at the reference stations are just used directly in order to send those or to derive interpolated transformation offsets to be sent. Thus, in the method illustrated in Fig. 2, no post-fit transformation residuals are sent but the entire transformation offset is.

Specifically, in step s10b, for each of a plurality of reference stations in the region, at least one transformation offset applicable to the reference station is generated. The number of transformation offsets depends on the number of reference stations, i.e. there is a set of transformation offsets per reference station. The transformation offset(s) represents a geodetic transformation from a global frame to a local frame, and the transformation offset(s) is generated based on coordinates, in the global frame, of the reference stations and on coordinates, in the local frame, of the reference stations. More specifically, the transformation offset(s) may be generated by computing the difference (e.g., a vector dXYZ) between the coordinates XYZ of a reference station in the local frame and in the global frame. Further, in step s20b, for each of a plurality of points, here referred to as "output points", of the region, offsets, here referred to as "output offsets", are sent. An output offset is either one of the generated transformation offsets -i.e., generated in above-discussed step s10b- or is derived from (e.g., by interpolation or averaging) generated transformation offsets applicable to at least two of the reference stations.

Apart from these differences between steps s10a and s10b and between steps s20a and s20b, all the considerations discussed above in relation to Fig. 1 apply mutatis mutandis to the embodiment illustrated in Fig. 2. For example, the distribution, in the embodiment illustrated in Fig. 2, of output points for the transmission of transformation offsets or interpolated transformation offsets (i.e., output offsets) allows a similar reduction of the amount of transmitted information as the distribution, in the embodiment illustrated in Fig. 1, of output points for the transmission of post-fit transformation residuals or interpolated post-fit transformation residuals (output residuals).

Thus, Fig. 2 shows that it is possible to skip the similarity transformation parameters entirely and just use the transformation offset occurring at the reference stations, or at the output points, and send them using, for example, a quadtree data structure (as will be described further below). In this exemplary case, the quadtree data structure does not contain post-fit transformation residuals but the entire transformation offset (shift).

Relying on transformation offsets, as illustrated in Fig. 2, is advantageous in terms of processing load in that this does not require the performance of a regression such as a least-squares adjustment.

Turning now to the processing on the NSS receiver side, Fig. 3 is a flowchart of a method in one embodiment of the invention, the method being carried out by a NSS receiver and/or a processing entity capable of receiving data from the NSS receiver, for receiving and processing, for example for positioning purposes, geodetic datum transformation information applicable to a region of the Earth.

That is, the method illustrated in Fig. 3 may be carried out by a NSS receiver configured for observing NSS signals from a plurality of NSS satellites over multiple epochs, by another processing entity (which may be a system) capable of receiving data from the NSS receiver, or by the NSS receiver in conjunction with such other processing entity or system (i.e., by the NSS receiver and another processing entity or system). The processing entity or system may be located remotely from the NSS receiver and may, for example, receive data representing the NSS observations from the NSS receiver. In one embodiment, the method is partially or fully carried out in the cloud, i.e. by any number of processing entities in the cloud.

The NSS receiver comprises at least one antenna, i.e. it may comprise a single antenna or a plurality of antennas. If the NSS receiver comprises one antenna configured to receive signals at one frequency, there may be a single electrical antenna phase centre (APC). If the NSS receiver comprises one antenna configured to receive signals at a plurality of frequencies (i.e., different frequencies broadcasted by NSS satellites, whether from one NSS or from a plurality of NSS), there may be one APC per frequency, i.e. in total a plurality of APCs. Likewise, there are a plurality of APCs if the NSS receiver comprises a plurality of antennas. The methods are mainly described in the present document for a single APC -and corresponding NSS signals and measurements- associated with a single frequency. However, the methods, using antenna phase correction tables if required as practiced in the art, may also be applied for a plurality of APCs -and corresponding NSS signals and measurements- associated with different frequencies in parallel.

In step s130a, the NSS receiver, or a processing entity capable of receiving data from the NSS receiver, receives 2D or 3D similarity transformation parameters for a geodetic transformation from a first reference frame, here referred to as "global frame", to a second reference frame, here referred to as "local frame", and, for each of a plurality of points in the region, post-fit transformation residuals applicable to the point, wherein the distribution of the points in the region is not uniform. As discussed above with reference to Figs. 1 and 2, the transmission of post-fit transformation residuals for points being non-uniformly distributed within the region creates the ability to provide geodetic datum transformation information in an efficient manner in terms of payload, information content, and bandwidth. In one embodiment, the distribution of the points in the region is not uniform in that there is at least a first sub-region of the region in which the average distance between adjacent points is greater than in a second sub-region of the region.

In step s140a, the NSS receiver, or a processing entity capable of receiving data from the NSS receiver, estimates a position of the NSS receiver in the global frame. In one embodiment, this means estimating a position of an APC of the NSS receiver.

In one embodiment, in order to estimate s140a a position of the NSS receiver in the global frame, an estimation process, here referred to as "estimator", is operated. The estimator uses state variables and computes values of its state variables at least based on NSS observations made by the NSS receiver. The estimator may be or may comprise an algorithm, procedure, or process, or a piece of software, firmware, and/or hardware configured for implementing such an algorithm, procedure, or process, in which a set of state variables (or "state vector") is maintained over time, i.e. the values of the state variables are estimated based on measurements made over time. The measurements may comprise data representing observed NSS signals and data from other sensor(s). The estimator involves or comprises, in one embodiment, a Kalman filter, a least squares estimator, and/or a robust estimator. The invention is, however, not limited to the use of Kalman filter(s), least squares estimator(s), and/or robust estimator(s). Other estimation processes, filters, or filter techniques may be used.

Some of the estimator's state variables may represent, for example, the position of one or more points of, or associated with, the NSS receiver (such as the position of an APC of the NSS receiver), an offset in the position of one or more points of, or associated with, the NSS receiver relative to another position (the offset per se being therefore a relative position), an offset in the position of one or more points of, or associated with, the NSS receiver relative to another epoch, the rate of change of the position, the rate of change of the offset in the position, a bias related to the NSS receiver, a bias related to any of the NSS satellites, a bias related to any of the satellite systems, a bias related to any of the NSS signals, the rate of change of any of the said biases, or any combination of the above.

Some of the estimator's state variables may also represent estimated parameters, which may for example indicate the most probable number of carrier cycles along the distance separating an NSS satellite from the NSS receiver. That is, the estimated parameters may comprise the resolved integer ambiguity.

The NSS estimator may optionally use additional data to compute the values of its state variables, such as data from a broadcasted correction stream (see e.g. refs. [3] and [4]).

In one embodiment, the estimator computes values of its state variables at the NSS receiver epoch rate so that the time interval between two estimator epochs is equal to the time interval between two successive NSS receiver epochs. In another embodiment, the estimator computes values of its state variables at a lower rate than the NSS receiver epoch rate. In such a case, this means that the method does not necessarily use all the data collected by the NSS receiver. In one embodiment, the estimator computes values of its state variables at a lower rate than the NSS receiver epoch rate depending on a condition, such as a condition depending on the number of available satellites ("available" means here available from the perspective of the NSS receiver, i.e. satellites from which the NSS receiver can receive NSS signals). For example, the method may be configured so that the estimator computes values of its state variables at a lower rate than the NSS receiver epoch rate if the number of available satellites is 6 or larger than 6.

In step s150a, an estimate of the position of the NSS receiver in the local frame is obtained based on the similarity transformation parameters, on at least part of the post-fit transformation residuals, and on the estimated position of the NSS receiver in the global frame.

In one embodiment, obtaining s150a an estimate of the position of the NSS receiver in the local frame comprises interpolating at least part of the post-fit transformation residuals to the position of the NSS receiver. This may be advantageous notably in terms of accuracy. In one embodiment, an inverse distance weighting (IDW) interpolation is performed. Other types of interpolation may be used, however, such as for example a linear interpolation, a spline interpolation, a cubic interpolation, or a bicubic interpolation.

More specifically, in one embodiment, (a) the post-fit transformation residuals for some of the points of the region are interpolated to the estimated position in the global frame -i.e. estimated in step s140a-, (b) the estimated position in the global frame is transformed into (i.e., shifted to) an estimated position in the local frame using (i.e., applying) the similarity transformation parameters, and (c) the estimated position in the local frame (obtained in (b)) is corrected by the interpolated post-fit transformation residuals.

In another embodiment, obtaining s150a an estimate of the position of the NSS receiver in the local frame comprises: (i) identifying the point -among the points for which post-fit transformation residuals have been received (see step s130a)- that is the nearest to the estimated position in the global frame -i.e. estimated in step s140a-, (ii) transforming the estimated position in the global frame into an estimated position in the local frame using (i.e., applying) the similarity transformation parameters, and (iii) correcting the estimated position in the local frame (obtained in (ii)) by the post-fit transformation residuals of the point identified in (i). This embodiment may be advantageous notably to reduce processing load.

Further, a process in which at least part of the post-fit transformation residuals are interpolated to the position of the NSS receiver (as discussed above) and a process in which the post-fit transformation residuals of the nearest point are used (as also discussed above) may be combined in one embodiment. For example, the first process or the latter may be selected in runtime. The selection in runtime may for example depend on the density of points in the sub-region under consideration and/or accuracy requirements.

In one embodiment, the method described with reference to Fig. 3 further comprises a step of observing NSS signals. In that embodiment, the method is therefore at least partially performed by the NSS receiver. In one embodiment, the NSS receiver observes NSS signals, and the NSS receiver then transmits data representing the observed NSS signals, or information derived therefrom, to another processing entity or set of processing entities in charge of carrying out steps s130a, s140a, and s150a.

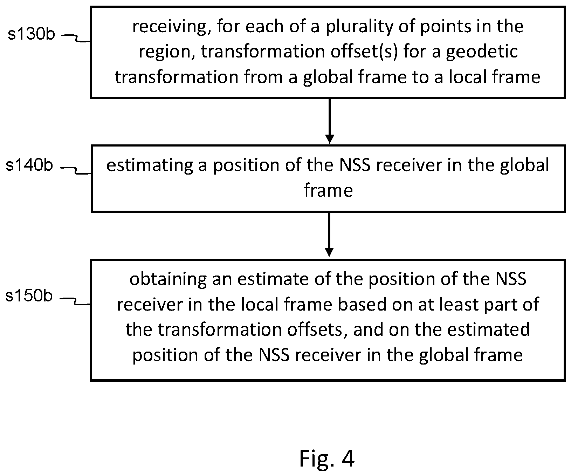

Fig. 4 is a flowchart of a method in another embodiment, the method being also carried out by a NSS receiver and/or a processing entity capable of receiving data from the NSS receiver, and also for receiving and processing, for example for positioning purposes, geodetic datum transformation information applicable to a region of the Earth. Specifically, the method illustrated in Fig. 4 differs from the method illustrated in Fig. 3 in that, rather than receiving s130a similarity transformation parameters, and, for each of a plurality of points, post-fit transformation residuals applicable to the point, similarity transformation parameters are not received and the transformation offsets occurring at the points are received. Thus, in the method illustrated in Fig. 4, no post-fit transformation residuals are received but the entire transformation offset is.

Specifically, in step s130b, for each of a plurality of points in the region, at least one transformation offset is received for a geodetic transformation from a first reference frame, here referred to as "global frame", to a second reference frame, here referred to as "local frame", wherein the distribution of the points in the region is not uniform. A position of the NSS receiver in the global frame is estimated s140b; and an estimate of the position of the NSS receiver in the local frame is obtained s150b based on at least part of the transformation offsets, and on the estimated position of the NSS receiver in the global frame. In one embodiment, obtaining s150b an estimate of the position of the NSS receiver in the local frame comprises interpolating at least part of the transformation offsets to the position of the NSS receiver. This may be advantageous notably in terms of accuracy. More specifically, in one embodiment, (a) the transformation offsets for some of the points of the region are interpolated to the estimated position in the global frame -i.e. estimated in step s140b-, and (b) the estimated position in the global frame is transformed into an estimated position in the local frame using the interpolated transformation offsets.

In another embodiment, obtaining s150b an estimate of the position of the NSS receiver in the local frame comprises: (i) identifying the point -among the points for which transformation offset(s) have been received (see step s130b)- that is the nearest to the estimated position in the global frame -i.e. estimated in step s140b-, and (ii) transforming the estimated position in the global frame into an estimated position in the local frame using the transformation offset(s) of the point identified in (i). This embodiment may be advantageous notably to reduce processing load.

Further, a process in which at least part of the transformation offsets are interpolated to the position of the NSS receiver (as discussed above) and a process in which the transformation offset(s) of the nearest point are used (as also discussed above) may be combined in one embodiment. For example, the first process or the latter may be selected in runtime, and the selection may for example depend on the density of points in the sub-region under consideration and/or accuracy requirements.

All other considerations discussed above in relation to Fig. 3 apply mutatis mutandis to the embodiment illustrated in Fig. 4. For example, the distribution, in the embodiment illustrated in Fig. 4, of points for the transmission of transformation offsets or interpolated transformation offsets allows a similar reduction of the amount of transmitted information as the distribution, in the embodiment illustrated in Fig. 3, of points for the transmission of post-fit transformation residuals or interpolated post-fit transformation residuals.

In one embodiment of the method as described with reference to Fig. 1 (i.e., involving notably the transmission of similarity transformation parameters and output residuals), the output residuals are sent as a tree data structure. Preferably, the tree data structure is a quadtree data structure or a compressed or sparse data structure. Most preferably, the tree data structure is a compressed or sparse quadtree data structure. Other compression techniques for spatial data may, however, also be used. For example, post-fit transformation residuals may be interpolated to a regularspaced grid and compressed by image compression techniques, such as PNG, or by text compression techniques.

In one embodiment of the method as described with reference to Fig. 2 (i.e., involving notably the transmission of output offsets), the output offsets are sent as a tree data structure. Preferably, the tree data structure is a quadtree data structure or a compressed or sparse data structure. Most preferably, the tree data structure is a compressed or sparse quadtree data structure. Again, other compression techniques may, however, also be used.

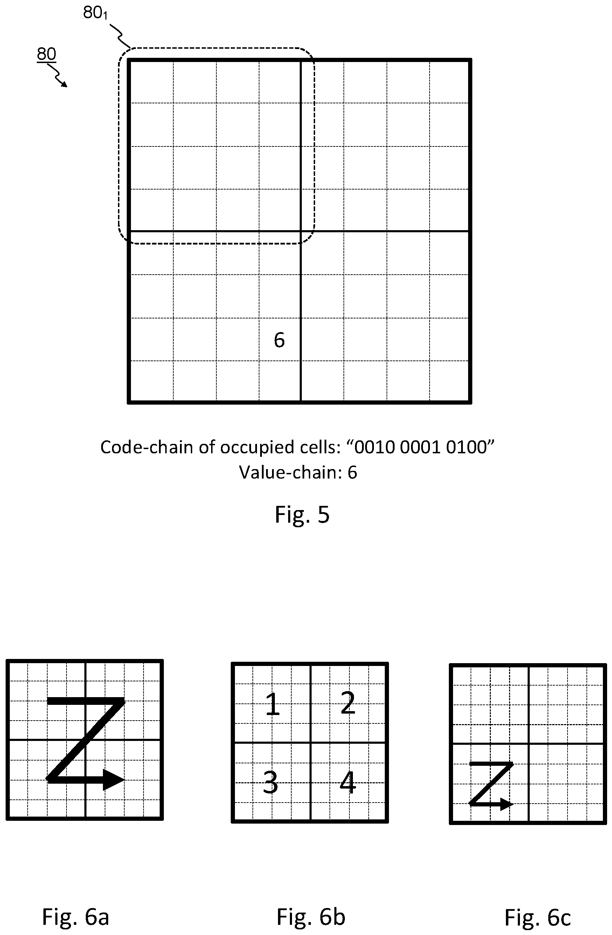

Figs. 5, 6a to 6e, and 7 schematically illustrate principles underlying an exemplary encoding of output residuals into a sparse quadtree data structure, in one embodiment. Although the description of these figures will be referring to the output residuals (as described with reference to Fig. 1), the description also applies to the output offsets (as described with reference to Fig. 2).

Fig. 5 shows a grid 80 corresponding to a rectangular region to which geodetic data transformation information is applicable. To illustrate in a simple way the principles underlying an exemplary encoding of output residuals as the sparse quadtree data structure, let's first imagine that the aim is to transmit an output residual value "6" associated with an output point corresponding to the centre of the cell situated in the seventh row and fourth column of grid 80.

In that case, a code-chain (i.e., an address chain) of occupied cells is formed as follows. The first bit indicates whether any of the cells of the first quarter $80_1$ (the upper left-hand quarter) of grid 80 contains any output point (and associated output residual value). Since first quarter $80_1$ does not contain any output point, the first bit of the code-chain of occupied cells is "0". Since the second quarter (the upper right-hand quarter) does not contain any output point either, the second bit of the code-chain of occupied cells is also "0". The third quarter (the lower left-hand quarter) contains an output point (and associated output residual value) so that the third bit of the code-chain of occupied cells is "1". Since the fourth quarter (the lower right-hand quarter) does not contain any output point, the fourth bit of the code-chain of occupied cells is "0". So far, the first four bits of the code-chain of occupied cells are "0010". Figs. 6a and 6b illustrate the order in which the quarters of grid 80 are considered. The invention, however, is not limited to that order, i.e. other orders may be used.

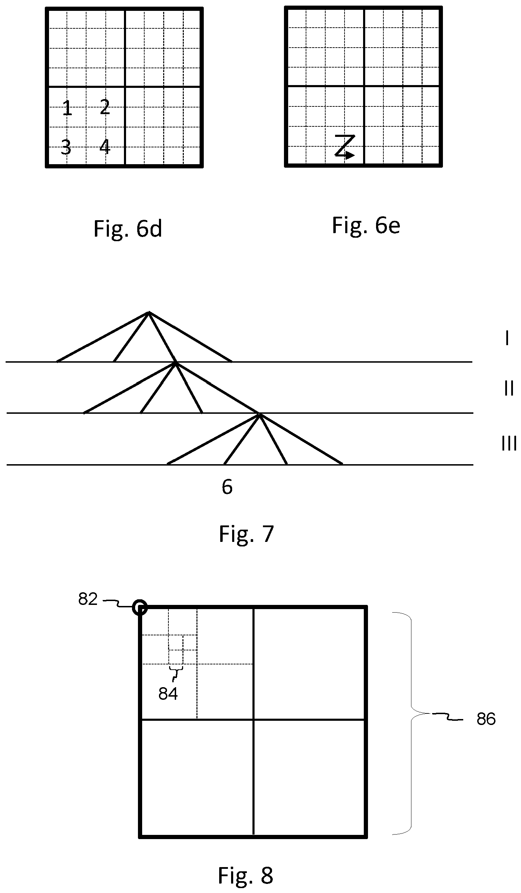

Then, the process is recursively repeated for each quarter containing at least one output point, in the order illustrated in Figs. 6a and 6b. In the example illustrated in Fig. 5, only the third quarter contains an occupied cell, so that the process is only performed for that quarter. The third quarter is itself divided into four quarters, here referred to as "second-level quarter", and since only the fourth second-level quarter contains an occupied cell, the next four bits of the code-chain of occupied cells are "0001". Thus, the first eight bits of the code-chain of occupied cells are now "0010 0001". Figs. 6c and 6d illustrate the order in which the second-level quarters of a quarter are considered. Again, the invention is not limited to that order, i.e. other orders may be used.

The above-referred fourth second-level quarter is itself divided into four quarters, here referred to as "third-level quarter", and since only the second third-level quarter contains (or here: is) an occupied cell, the next four bits of the code-chain of occupied cells are "0100". The code-chain of occupied cells is "0010 0001 0100". Fig. 6e illustrates the order in which the third-level quarters of a second-level quarter are considered. Again, the invention is not limited to that order.

Fig. 7 further illustrates, using a tree, how the code-chain of occupied cells "0010 0001 0100" is created over three levels I, II, and III. The invention is, however, not limited to three levels, i.e. not limited to this specific tree depth. Fewer or more levels, i.e. other maximum tree depths, may be used.

In the example of Fig. 5, the chain of values corresponding to the code-chain of occupied cells "0010 0001 0100" is "6", as only one cell in grid 80 is occupied.

Fig. 8 schematically illustrates a quadtree definition in one embodiment, with a mounting point 82 (i.e., its latitude and longitude position), a cell resolution 84 (i.e., a latitude and longitude extent), and a dimension 86 (including its orientation in space). The quadtree definition may be sent to, or may be known by, the receiver side.

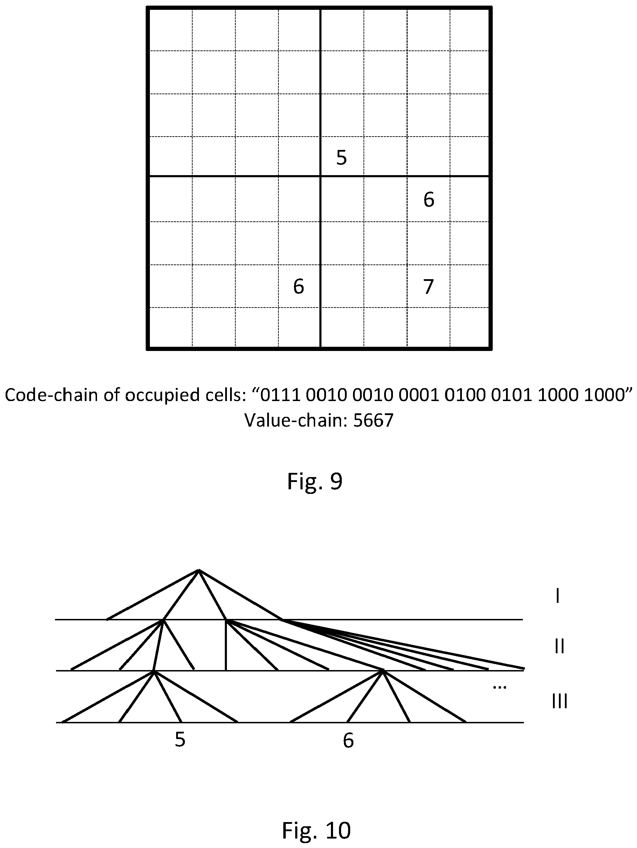

Fig. 9 schematically illustrates the encoding, as a sparse quadtree data structure, of output residuals of another exemplary grid, in one embodiment. The exemplary grid contains four output points (and four associated output residuals) as illustrated. The values of the output residuals associated with each of the four output points result from the spatial interpolation of post-fit transformation residuals associated with reference stations in the vicinity of each outpoint point. The code-chain of occupied cells is formed similarly as discussed above (with reference to Fig. 5), as follows. The first four bits of the code-chain of occupied cells are "0111", because the second, third, and fourth quarters each contain at least one occupied cell.

Then, the process is recursively repeated for each quarter containing at least one output point, in the order illustrated in Figs. 6a and 6b. Namely, the second quarter is itself divided into four second-level quarters, and since only the third second-level quarter contains an occupied cell, the next four bits of the code-chain of occupied cells are "0010". The above-referred third second-level quarter is itself divided into third-level quarters, and since only the third third-level quarter contains (or here: is) an occupied cell, the next four bits of the code-chain of occupied cells are "0010". The code-chain of occupied cells is therefore so far "0111 0010 0010".

The third quarter is then divided into four second-level quarters, and since only the fourth second-level quarter thereof contains an occupied cell, the next four bits of the code-chain of occupied cells are "0001". The above-referred fourth second-level quarter is itself divided into third-level quarters, and since only the second third-level quarter contains (or here: is) an occupied cell, the next four bits of the code-chain of occupied cells are "0100". The code-chain of occupied cells then becomes "0111 0010 0010 0001 0100". The process is repeated for the fourth quarter and the code-chain of occupied cells then becomes "0111 0010 0010 0001 0100 0101 1000 1000". Fig. 10 further schematically illustrates, using a tree, how the code-chain of occupied cells of Fig. 9 may be created over three exemplary levels I, II, and III. A skilled person would recognize that, merely for the sake of brevity, Fig. 10 illustrates only part of the process used for creating the chain of occupied cells of Fig. 9. A skilled person would have no difficulty in completing the tree.

In the example of Fig. 9, the chain of values corresponding to the code-chain of occupied cells "0111 0010 0010 0001 0100 0101 1000 1000" is "5667", as four cells in the grid are occupied. The code-chain of occupied cells and the chain of values may then be sent, for example broadcast, from the network side to the NSS receiver(s) (or other processing entity or entities capable of receiving data from the NSS receiver(s)) in the region under consideration.

The invention is, however, neither limited to rectangular regions nor to rectangular cells. Other types of regions and cells may be used.

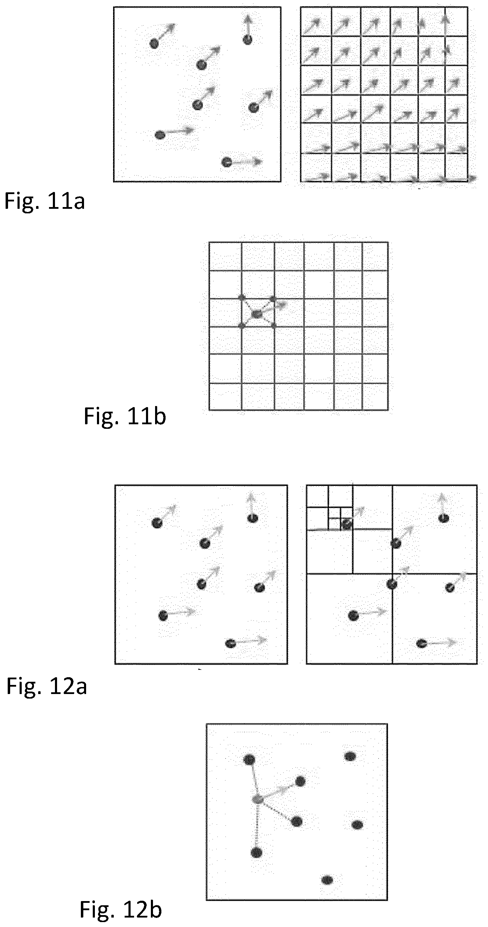

Fig. 11a schematically illustrates the generation, on a network side, of an exemplary, uniform grid of interpolated post-fit transformation residuals (i.e., output residuals), in accordance with a non-claimed reference implementation. Namely, the left-hand side part of Fig. 11a schematically illustrates the position of seven reference stations (each represented by a dot) and their associated post-fit transformation residual values (each represented by a vector). The right-hand side part of Fig. 11a then represents a uniform grid of 36 post-fit transformation residuals spatially interpolated based on the values shown on the left-hand side part of Fig. 11a. In that non-claimed reference implementation, this uniform grid of post-fit transformation residuals is sent and received on the NSS receiver side.

Fig. 11b schematically illustrates the interpolation, on the NSS receiver side, of residuals from a received grid of residuals, in accordance with a non-claimed reference implementation corresponding to that of Fig. 11a. Namely, a uniform grid of post-fit transformation residuals as schematically illustrated on the left-hand side part of Fig. 11a is received, a residual is generated by interpolation for the position of the NSS receiver, and the generated residual is used to correct the position, in the local frame, of the NSS receiver estimated based on the similarity transformation parameters.

Fig. 12a schematically illustrates the generation, on a network side, of an exemplary, sparse quadtree data structure for transmitting output points and associated post-fit transformation residuals (i.e., output residuals) or transformation offsets (i.e., output offsets) corresponding to the output points, in one embodiment. Namely, the left-hand side part of Fig. 12a schematically illustrates the position of seven reference stations (each represented by a dot) and their associated post-fit transformation residual values (each represented by a vector). The right-hand side part of Fig. 12a then represents a sparse quadtree data structure (which may be formed as discussed above with reference to Figs. 5 to 10) of seven post-fit transformation residuals corresponding to, or spatially interpolated (for example, by IDW interpolation) based on, the values shown on the left-hand side part of Fig. 12a. The sparse quadtree data structure of post-fit transformation residuals is then sent and received on the NSS receiver side.

Fig. 12b schematically illustrates the interpolation, on the NSS receiver side, of residuals (or transformation offsets) from a received sparse quadtree data structure corresponding to that of Fig. 12a. Namely, a sparse quadtree data structure containing points and associated post-fit transformation residuals as schematically illustrated on the left-hand side part of Fig. 12a is received, a residual (or transformation offsets) is generated by interpolation (for example, an IDW interpolation) for the position of the NSS receiver, and the generated residual (or transformation offset) is used to correct the position, in the local frame, of the NSS receiver estimated based on the received similarity transformation parameters (or, for transformation offsets, is used to directly shift the position of the NSS receiver into the local frame).

The skilled person will therefore understand that, in Figs. 12a and 12b, the distribution of output points in the region depends on the distribution of reference stations in the region, whereas this is not the case in the non-claimed reference implementation of Figs. 11a and 11b. In Figs. 11a-11b and 12a-12b, different interpolation processes are performed on the network side and on the NSS receiver side but the technique of Figs. 12a and 12b is more efficient in terms of transmitted payload, information content, and bandwidth, as explained above.

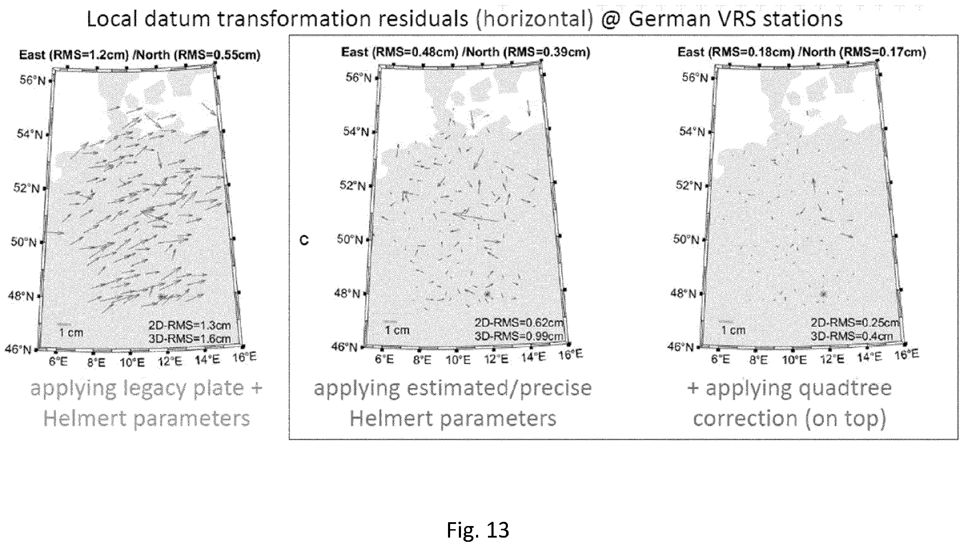

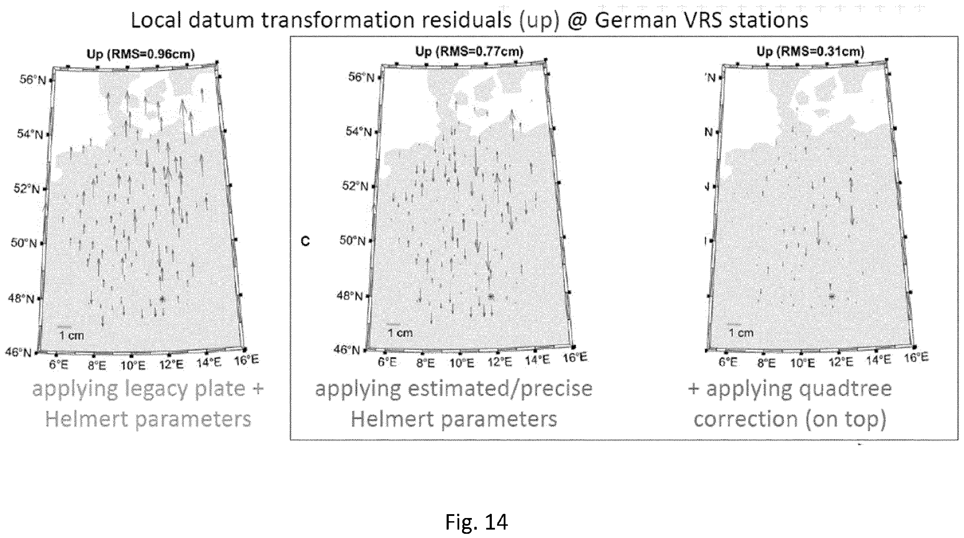

Fig. 13 shows local datum transformation residuals (horizontal component), i.e. remaining transformation errors in north/east direction, resulting from three different transformation methods for reference stations spread through Germany, and Fig. 14 shows local datum transformation residuals (up component, i.e. vertical component), i.e. remaining transformation errors in vertical direction, resulting from three different transformation methods for reference stations spread through Germany.

The three transformation methods shown in Figs. 13 and 14 may be further explained as follows:

1) First method (not claimed): the leftmost plots in Figs. 13 and 14 show transformation residuals after applying a tectonic plate motion model for the Eurasian plate according to ref. [9] and similarity transformation parameters for a transformation from global frame (ITRF2014) to local frame according to ref. [10] at the local frame's reference epoch (year 2000.0).

2) Second method (in accordance with one embodiment of the invention): the center plots in Figs. 13 and 14 show transformation residuals after applying similarity transformation parameters generated based on the coordinates of the plurality of reference stations in global frame and local frame.

3) Third method (in accordance with one embodiment of the invention): the rightmost plots in Figs. 13 and 14 show transformation residuals after applying the second method (see previous paragraph) and additionally applying the post-fit transformation residuals (of the second method) given at the plurality of references stations, distributed and interpolated via the output points provided in the sparse quadtree data structure.

The RMS of the transformation residuals is decreasing from left to right, indicating the advantage of the embodiment of the invention over a non-claimed transformation approach in accordance with the first method.

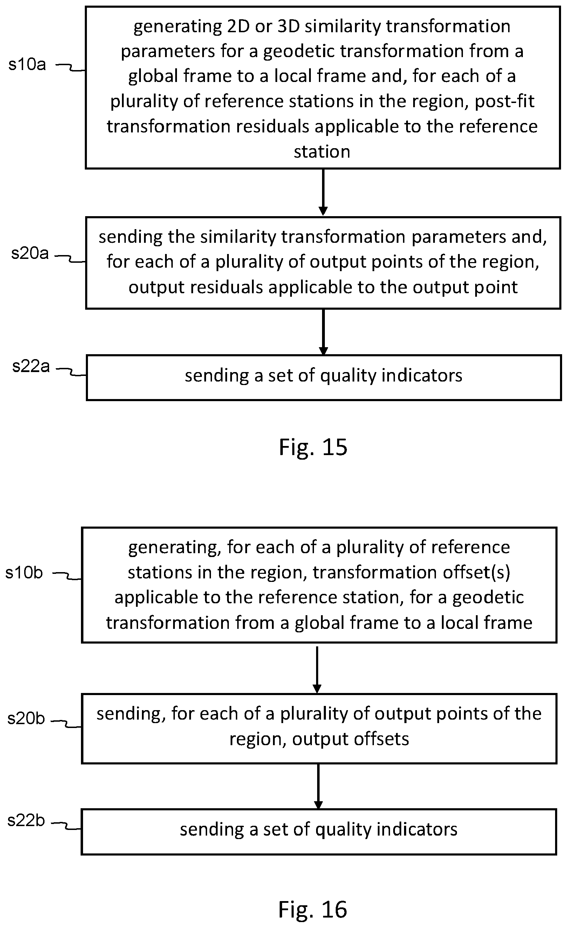

Fig. 15 is a flowchart of a method in one embodiment, notably involving sending (e.g., broadcasting) 2D- or 3D-similarity transformation parameters, post-fit transformation residuals (i.e. output residuals), and a set of quality indicators (QI). That is, the method of Fig. 15 differs from the method described with reference to Fig. 1 into that it further includes a step s22a of sending a set of QIs for the similarity transformation parameters and/or the output residuals. Specifically, the set of QIs provides at least one of: (i) a measure of accuracy of the similarity transformation parameters and (ii) a measure of accuracy of the output residuals. A measure of accuracy indicates the extent to which the similarity transformation parameters and/or the output residuals are estimated to be accurate in terms of transformation into the local frame, i.e. estimated to match the true data. The set of QIs are regionalized, i.e. they apply to the region to which the similarity transformation parameters and/or the output residuals apply. From an application-perspective, the measure of accuracy of the similarity transformation parameters gives the application the possibility to judge whether or not the similarity transformation parameters are (already) sufficient for its positioning purpose.

In embodiments in which step s22a comprises sending a set of QIs for the similarity transformation parameters and the output residuals, aggregated QI values may be used for both the similarity transformation parameters and the output residuals (i.e., a QI value providing an aggregated measure of accuracy of the similarity transformation parameters and the output residuals), or, alternatively, separate QI values may be used (i.e., a first QI value providing a measure of accuracy of the similarity transformation parameters and a second QI value providing a measure of accuracy of the output residuals).

Fig. 16 is a flowchart of a method in one embodiment, notably involving sending (e.g., broadcasting) transformation offset(s) (i.e. output offsets), and a set of QIs. That is, the method of Fig. 16 differs from the method described with reference to Fig. 2 into that it further includes a step s22b of sending a set of QIs for the output offsets. Specifically, the set of QIs provides a measure of accuracy of the output offsets.

In one embodiment, the set of QIs of Fig. 15 or 16 comprises at least one of:

(a) a horizontally applicable QI (i.e., a 2D QI) and a vertical applicable QI (i.e., a Up QI); (b) a north-component QI, an east-component QI, and an up-component QI; and

(b) an x-component QI, a y-component QI, and a z-component QI. Other coordinate systems may be used however, such as for example ellipsoidal coordinate systems.

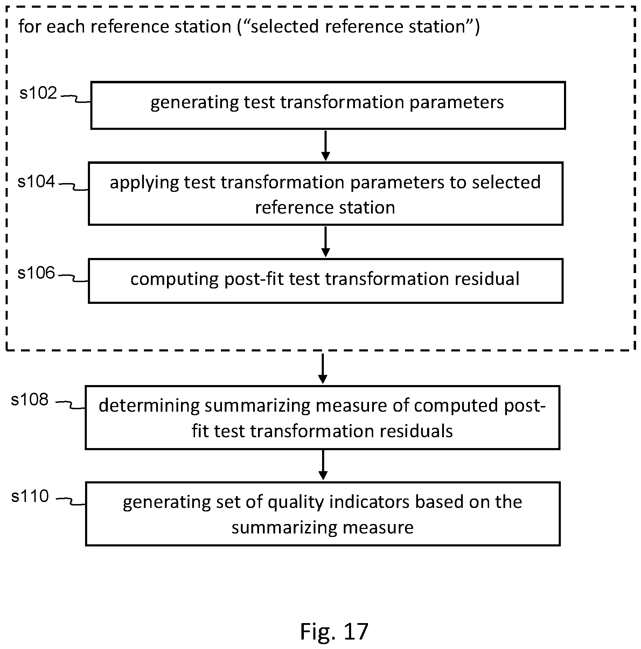

Fig. 17 is a flowchart of a process of generating a set of QIs in a method in one embodiment. The set of QIs is valid for the region to which the geodetic datum transformation information is applicable. The method comprises generating the set of QIs by at least carrying out the following steps. First, steps s102, s104, and s106 are repeated for each of the reference stations. In each occurrence, one of the reference stations is here referred to as "selected reference station", for the sake of clarity.

In step s102, geodetic datum transformation parameters, here referred to as "test transformation parameters", are generated for all reference stations except for the selected reference station. In other words, at each occurrence of steps s102 to s106, one reference station is taken out. The test transformation parameters comprise: (i) similarity transformation parameters if the set of QIs provides a measure of accuracy of the similarity transformation parameters that are sent (see step s22a as described above with reference to Fig. 15); (ii) output residuals if the set of QIs provides a measure of accuracy of the output residuals that are sent (see step s22a as described above with reference to Fig. 15); and (iii) output offsets if the set of QIs provides a measure of accuracy of the output offsets that are sent (see step s22b as described above with reference to Fig. 16). In step s104, the test transformation parameters are applied to the selected reference station. Then, in step s106, a residual, here referred to as "post-fit test transformation residual", is computed based on a known position of the selected reference station and on a position of the selected reference station as obtained by applying the test transformation parameters to the selected reference station. As mentioned above, this is repeated for all reference stations. The iteration ends when all reference stations have been selected.

In step s108, a measure, here referred to as "summarizing measure", of the computed post-fit test transformation residuals (i.e., computed in the plurality of occurrences of step 106) is determined.

In step s110, the set of QIs is generated based on the summarizing measure.

In one embodiment, the summarizing measure is or comprises a mean of the computed post-fit test transformation residuals, and preferably is, comprises, or corresponds to the root mean square (RMS) of the computed post-fit test transformation residuals. Other summarizing measures than the mean may be used, however. Purely for the sake of illustration, Table 1 shows an example of correspondence between RMS and quality indicator (QI), for one dimension (e.g., horizontal, i.e. 2D). Another QI may be used for the vertical accuracy.

Table 1. Example of correspondence between RMS and quality indicator (QI).

| RMS | quality indicator (QI) value |
|---|---|
| RMS value < 0.1 cm | 0 |
| 0.1 cm $\leq$ RMS value < 0.2 cm | 1 |
| 0.2 cm $\leq$ RMS value < 0.5 cm | 2 |
| 0.5 cm $\leq$ RMS value < 1 cm | 3 |
| 1 cm $\leq$ RMS value < 2 cm | 4 |
| 2 cm $\leq$ RMS value < 5 cm | 5 |
| 5 cm $\leq$ RMS value < 10 cm | 6 |
| 10 cm $\leq$ RMS value < 20 cm | 7 |
| 20 cm $\leq$ RMS value < 50 cm | 8 |
| RMS value $\geq$ 50 cm | 9 |
| unknown | 10 |

In one embodiment, an outlier detection process may be performed to identify malfunctioning and/or wrongly configured reference stations prior to generating s10a post-fit transformation residuals or generating s10b transformation offsets for such a reference station. Such an outlier detection process may for example be performed as follows. The residuals, i.e. transformation errors, of a transformation may be examined based on a plate/crustal motion model and (published/official) Helmert parameters (i.e., legacy parameters). These residuals are shown in the leftmost plots of Figs. 13 and 14. Then, empirical, region-specific thresholds for these generated residuals (individually for east/north/up) are obtained, which allows to determine if a residual is considered to be an outlier. Coarse thresholds may be used (e.g. 5 cm) for the east-/north-component and the doubled value for the up-component (e.g. 10 cm). Once an outlier is detected (e.g., in the generating system on the server side), the reference station may be taken out entirely (automatically), or a warning may be issued indicating that there is, or might be, something wrong with a reference station. In practice, it is rare that there is an outlier in one of (a) the ITRF (global) position or (b) the local frame position of the reference station since (a) is a strongly smoothed position solution and (b) is a fixed coordinate that is newly evaluated in surveys every few years.

## System

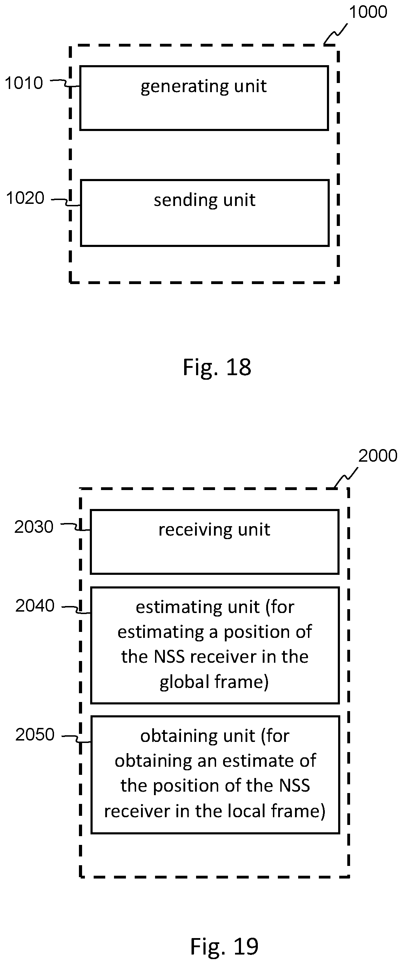

Fig. 18 schematically illustrates a system 1000 in one embodiment. System 1000 is configured for providing geodetic datum transformation information applicable to a region of the Earth, the geodetic datum transformation information being suitable for use by a NSS receiver and/or a processing entity capable of receiving data from the NSS receiver. System 1000 comprises a first unit, here referred to as generating unit 1010, and a second unit, here referred to as sending unit 1020. Generating unit 1010 is configured for carrying out step s10a and/or s10b as described above with reference to Figs. 1 and 2 respectively, and sending unit 1020 is configured for carrying out step s20a and/or s20b as also described above with reference to Figs. 1 and 2 respectively.

Fig. 19 schematically illustrates a system 2000 in one embodiment. System 2000 comprises an NSS receiver (not illustrated in Fig. 19) and/or a processing entity (not illustrated in Fig. 19) capable of receiving data from the NSS receiver. System 2000 is configured for receiving and processing geodetic datum transformation information applicable to a region of the Earth. System 2000 comprises a first unit, here referred to as receiving unit 2030, a second unit, here referred to as estimating unit 2040, and a third unit, here referred to as obtaining unit 2050. Receiving unit 2030 is configured for carrying out step s130a and/or s130b as described above with reference to Figs. 3 and 4 respectively, estimating unit 2040 is configured for carrying out step s140a and/or s140b as also described above with reference to Figs. 3 and 4 respectively, and obtaining unit 2050 is configured for carrying out step s150a and/or s150b as also described above with reference to Figs. 3 and 4 respectively.

In one embodiment, a vehicle comprises a system 2000 as described above. The vehicle may for example be an autonomous vehicle such as a self-driving vehicle, a driverless vehicle, a robotic vehicle, a highly automated vehicle, a partially automated vehicle, an aircraft, or an unmanned aerial vehicle. Alternatively or additionally, the vehicle may for example be at least one of (the list of possibilities is not meant to be exhaustive): a motor vehicle, a car, a truck, a bus, a train, a motorcycle, a tractor, an agricultural equipment, an agricultural tractor, a combine harvester, a crop sprayer, a forestry equipment, a construction equipment, a grader, and a train. Exemplary applications may include machine guidance, construction work, operation of unmanned aerial vehicles (UAV), also known as drones, and operation of unmanned surface vehicles/vessels (USV).

In one embodiment, a mobile device comprises a system 2000 as described above. The mobile device may be any type of communication terminal such as, for example, a mobile phone, a smartphone, a laptop, or any other type of portable device. The mobile device may be able to use or display positions.

## Additional remarks

Any of the above-described methods and their embodiments may be implemented, at least partially, by means of a computer program or a set of computer programs. The computer program(s) may be loaded on an apparatus or device, such as for example a server (which may comprise one or a plurality of computers), an NSS receiver (running on a rover station, on a moving reference station, or within a vehicle), and/or an NSS receiver chipset for mobile phones or automotive applications. Therefore, the invention also relates, in some embodiments and/or aspects, to a computer program or set of computer programs, which, when carried out on an apparatus or device as described above, such as for example a server, an NSS receiver (running on a rover station, on a moving reference station, or within a vehicle) or an NSS receiver chipset, carries out any one of the above-described methods and their embodiments.

The invention also relates, in some embodiments, to a computer-readable medium or a computer-program product including the above-mentioned computer program. The computer-readable medium or computer-program product may for instance be a magnetic tape, an optical memory disk, a magnetic disk, a magnetooptical disk, an SSD, a CD-ROM, a DVD, a CD, a flash memory unit, or the like, wherein the computer program is permanently or temporarily stored. In some embodiments, a computer-readable medium (or to a computer-program product) has computer-executable instructions for carrying out any one of the methods of the invention.

In one embodiment, a computer program as claimed may be delivered to the field as a computer program product, for example through a firmware or software update to be installed on receivers already in the field. This applies to each of the above-described methods and systems.

As mentioned above, a NSS receiver comprises one or more antennas configured to receive NSS signals at the frequencies broadcasted by the NSS satellites, and a NSS receiver may further comprise processor units, one or a plurality of accurate clocks (such as crystal oscillators), one or a plurality of central processing units (CPU), one or a plurality of memory units (RAM, ROM, flash memory, or the like), and a display for displaying position information to a user.

Where the terms "generating unit", "sending unit", "receiving unit", "estimating unit", "obtaining unit", and the like are used herein as units (or sub-units) of a system or apparatus (such as an NSS receiver), no restriction is made regarding how distributed the constituent parts of a unit (or sub-unit) may be. That is, the constituent parts of a unit (or sub-unit) may be distributed in different software, firmware, or hardware components or devices for bringing about the intended function. Further, the units may be gathered together for performing their functions by means of a combined, single unit (or sub-unit).

For example, in one embodiment, generating unit 1010 and sending unit 1020 are implemented using a single piece of software, a single piece of hardware, and/or as a single piece of firmware. In another embodiment, receiving unit 2030, estimating unit 2040, and obtaining unit 2050 are implemented using a single piece of software, a single piece of hardware, and/or as a single piece of firmware. In yet another embodiment, the NSS receiver, receiving unit 2030, estimating unit 2040, and obtaining unit 2050 are implemented using a single piece of software, a single piece of hardware, and/or as a single piece of firmware.

The above-mentioned units and sub-units may be implemented using hardware, software, firmware, any combination of hardware, software, and firmware, pre-programmed ASICs (application-specific integrated circuits), etc. A unit may include a central processing unit (CPU), a storage unit, input/output (I/O) units, network connection devices, etc.

Although the present invention has been described on the basis of detailed examples, the detailed examples only serve to provide the skilled person with a better understanding and are not intended to limit the scope of the invention. The scope of the invention is defined by the appended claims.

Abbreviations:

| | |
|---|---|
| 2D | two-dimensional |
| 3D | three-dimensional |
| APC | antenna phase center |
| ASIC | application-specific integrated circuit |
| BDS | BeiDou Navigation Satellite System |
| BTRF | BeiDou Terrestrial Reference Frame |
| C/A | coarse/acquisition (code) |
| CD | compact disc |
| CD-ROM | compact disk read-only memory |
| CPU | central processing unit |
| DVD | digital versatile disc |
| GNSS | global navigation satellite system |
| GPS | Global Positioning System |
| GTRF | Galileo Terrestrial Reference Frame |
| I/O | input/output |
| IP | Internet Protocol |
| ITRF | International Terrestrial Reference Frame |
| ITRS | International Terrestrial Reference System |
| IDW | inverse distance weighting |
| LAD | least absolute deviation |
| NAVIC | NAVigation with Indian Constellation |
| NSS | navigation satellite system |
| PNG | Portable Network Graphics |
| ppm | parts-per-million |
| PPP | precise point positioning |
| PPP-RTK | precise point positioning real-time kinematic |
| PRN | pseudo-random noise |
| QI | quality indicator |
| QZSS | Quasi-Zenith Satellite System |
| RAM | random-access memory |
| ref. | reference |
| refs. | references |
| RMS | root mean square |
| RNSS | regional navigation satellite system |

# EP 4 485 009 A1

ROM        read-only memory
RTCM       Radio Technical Commission for Maritime Services
SNR        signal-to-noise ratio
SSD        solid-state disk
UAV        unmanned aerial vehicle
USV        unmanned surface vehicle/vessel
VRS        virtual reference station

References:

[1] Hofmann-Wellenhof, B., et al., "GNSS, Global Navigation Satellite Systems, GPS, GLONASS, Galileo, & more", Springer-Verlag Wien, 2008.
[2] RTCM Standard 10403.2, "Differential GNSS (Global Navigation Satellite Systems) Services - Version 3", February 1, 2013, RTCM Paper 104-2013-SC104-STD, Radio Technical Commission for Maritime Services, Arlington, Virginia, U.S.
[3] EP 3 035 080 A1 titled "Navigation satellite system positioning involving the generation of correction information" (Trimble ref.: A4396).
[4] EP 3 130 943 A1 titled "Navigation satellite system positioning involving the generation of tropospheric correction information" (Trimble ref.: 15072-EPO).
[5] RTCM Special Committee. "RTCM standard 10403.3 differential GNSS (global navigation satellite systems) services-version 3." RTCM Special Committee 104 (2016).
[6] Trimble (June 2009). "CMRx: A new correction format from Trimble". White paper, Trimble Navigation Ltd. Retrieved on May 17, 2023, from http://trl.trimble.com/docushare/dsweb/Get/Document-469944/WhitePaper_HeavyHighway_CMRxrev1.pdf
[7] Jan Van Sickle, "Two Types of Observables I GEOG 862: GPS and GNSS for Geospatial Professionals", John A. Dutton e-Education Institute, College of Earth and Mineral Sciences, The Pennsylvania State University, retrieved on November 8, 2021, from https://www.e-education.psu.edu/geog862/node/1752
[8] "Terrestrial Reference System". itrf.ign.fr. Retrieved on May 19, 2023, from https://itrf.ign.fr/en/background/trs-trf
[9] Altamimi et al. (2017), ITRF2014 plate motion model, Geophys. J. Int., 209/3, pp. 1906-1912, https://doi.org/10.1093/gji/ggx136
[10] ETRS89/DREF91 (Realisierung 2016), Richtlinie für den einheitlichen integrierten geodätischen Raumbezug des amtlichen Vermessungswesens in der Bundesrepublik Deutschland, Version 3.0, Stand 16.05.2017, Arbeitsgemeinschaft der Vermessungsverwaltungen der Länder der Bundesrepublik Deutschland (AdV).

## Claims

1. Method for providing geodetic datum transformation information applicable to a region of the Earth, the geodetic datum transformation information being suitable for use by at least one of: a navigation satellite system, hereinafter abbreviated as "NSS", receiver and a processing entity capable of receiving data from the NSS receiver, the method comprising:

   generating (s10a)

      two- or three-dimensional similarity transformation parameters for a geodetic transformation from a first reference frame, hereinafter referred to as "global frame", to a second reference frame, hereinafter referred to as "local frame", and,
      for each of a plurality of reference stations in the region, post-fit transformation residuals applicable to the reference station,

   based on coordinates, in the global frame, of the reference stations and on coordinates, in the local frame, of the reference stations; and
   sending (s20a) the similarity transformation parameters and, for each of a plurality of points, hereinafter referred to as "output points", of the region, residuals, hereinafter referred to as "output residuals", applicable to the output point, wherein

an output residual is either one of the generated post-fit transformation residuals or is derived from generated post-fit transformation residuals applicable to at least two of the reference stations; and

the distribution of the output points in the region depends on the distribution of the reference stations in the region.

2. Method of claim 1, wherein the similarity transformation parameters are Helmert parameters.

3. Method of claim 1 or 2, wherein generating (s10a) the similarity transformation parameters comprises a least-squares adjustment.

4. Method according to any one of the preceding claims, wherein the output residuals are sent as a tree data structure, wherein the tree data structure is preferably at least one of a quadtree data structure and a compressed or sparse data structure, most preferably a compressed or sparse quadtree data structure.

5. Method for providing geodetic datum transformation information applicable to a region of the Earth, the geodetic datum transformation information being suitable for use by at least one of: a navigation satellite system, hereinafter abbreviated as "NSS", receiver and a processing entity capable of receiving data from the NSS receiver, the method comprising:

generating (s10b), for each of a plurality of reference stations in the region, at least one transformation offset applicable to the reference station, for a geodetic transformation from a first reference frame, hereinafter referred to as "global frame", to a second reference frame, hereinafter referred to as "local frame", based on coordinates, in the global frame, of the reference stations and on coordinates, in the local frame, of the reference stations; and

sending (s20b), for each of a plurality of points, hereinafter referred to as "output points", of the region, offsets, hereinafter referred to as "output offsets", wherein

an output offset is either one of the generated transformation offsets or is derived from generated transformation offsets applicable to at least two of the reference stations; and

the distribution of the output points in the region depends on the distribution of the reference stations in the region.

6. Method of claim 5, wherein the output offsets are sent as a tree data structure, wherein the tree data structure is preferably at least one of a quadtree data structure and a compressed or sparse data structure, most preferably a compressed or sparse quadtree data structure.

7. Method according to any one of the preceding claims, wherein the distribution of the output points in the region depends on the distribution of the reference stations in the region in that

there is at least a first sub-region of the region in which the average distance between adjacent reference stations is greater than in a second sub-region of the region; and

the average distance between output points is greater in the first sub-region than in the second sub-region.

8. Method according to any one of the preceding claims, wherein the global frame is a terrestrial reference frame, which is preferably one of:

an International Terrestrial Reference Frame, hereinafter referred to as "ITRF";

a Galileo Terrestrial Reference Frame, hereinafter referred to as "GTRF"; and

a BeiDou Terrestrial Reference Frame, hereinafter referred to as "BTRF".

9. Method according to any one of the preceding claims, wherein the plurality of reference stations comprises at least three reference stations, preferably at least 10 reference stations, most preferably at least 100 reference stations.

10. Method according to any one of the preceding claims, further comprising:

sending (s22a, s22b) a set of quality indicators providing at least one of:

a measure of accuracy of the similarity transformation parameters, if the method depends directly or indirectly on claim 1;

a measure of accuracy of the output residuals, if the method depends directly or indirectly on claim 1; and

a measure of accuracy of the output offsets, if the method depends directly or indirectly on claim 5.

11. Method of claim 10, wherein the set of quality indicators comprises at least one of:

a horizontally applicable quality indicator and a vertical applicable quality indicator;
a north-component quality indicator, an east-component quality indicator, and an up-component quality indicator; and
an x-component quality indicator, a y-component quality indicator, and a z-component quality indicator.

12. Method of claim 10 or 11, wherein the set of quality indicators is generated by at least carrying out:

for each of the reference stations, hereinafter referred to as "selected reference station":

generating (s102) geodetic datum transformation parameters, hereinafter referred to as "test transformation parameters", for all reference stations except for the selected reference station, wherein the test transformation parameters comprise:

similarity transformation parameters if the set of quality indicators provides a measure of accuracy of the similarity transformation parameters that are sent;
output residuals if the set of quality indicators provides a measure of accuracy of the output residuals that are sent; and
output offsets if the set of quality indicators provides a measure of accuracy of the output offsets that are sent;

applying (s104) the test transformation parameters to the selected reference station; and
computing (s106) a residual, hereinafter referred to as "post-fit test transformation residual", based on a known position of the selected reference station and on a position of the selected reference station as obtained by applying the test transformation parameters to the selected reference station;

determining (s108) a measure, hereinafter referred to as "summarizing measure", of the computed post-fit test transformation residuals; and
generating (s110) the set of quality indicators based on the summarizing measure.

13. Method of claim 12, wherein the summarizing measure is or comprises a mean of the computed post-fit test transformation residuals, and preferably is, comprises, or corresponds to the root mean square of the computed post-fit test transformation residuals.

14. Method, carried out by at least one of a navigation satellite system, hereinafter abbreviated as "NSS", receiver and a processing entity capable of receiving data from the NSS receiver, for receiving and processing geodetic datum transformation information applicable to a region of the Earth, the method comprising:

receiving (s130a) two- or three-dimensional similarity transformation parameters for a geodetic transformation from a first reference frame, hereinafter referred to as "global frame", to a second reference frame, hereinafter referred to as "local frame", and, for each of a plurality of points in the region, post-fit transformation residuals applicable to the point, wherein the distribution of the points in the region is not uniform;
estimating (s140a) a position of the NSS receiver in the global frame; and
obtaining (s150a) an estimate of the position of the NSS receiver in the local frame based on the similarity transformation parameters, on at least part of the post-fit transformation residuals, and on the estimated position of the NSS receiver in the global frame.

15. Method of claim 14, wherein the post-fit transformation residuals are received as a tree data structure, wherein the tree data structure is preferably at least one of a quadtree data structure and a compressed data structure, most preferably a compressed quadtree data structure.

16. Method of claim 14 or 15, wherein obtaining (s150a) an estimate of the position of the NSS receiver in the local frame comprises interpolating at least part of the post-fit transformation residuals to the position of the NSS receiver.

17. Method, carried out by at least one of a navigation satellite system, hereinafter abbreviated as "NSS", receiver and a processing entity capable of receiving data from the NSS receiver, for receiving and processing geodetic datum transformation information applicable to a region of the Earth, the method comprising:

receiving (s130b), for each of a plurality of points in the region, at least one transformation offset for a geodetic transformation from a first reference frame, hereinafter referred to as "global frame", to a second reference frame, hereinafter referred to as "local frame", wherein the distribution of the points in the region is not uniform;
estimating (s140b) a position of the NSS receiver in the global frame; and
obtaining (s150b) an estimate of the position of the NSS receiver in the local frame based on at least part of the transformation offsets, and on the estimated position of the NSS receiver in the global frame.

18. Method of claim 17, wherein the transformation offsets are received as a tree data structure, wherein the tree data structure is preferably at least one of a quadtree data structure and a compressed data structure, most preferably a compressed quadtree data structure.

19. Method of claim 17 or 18, wherein obtaining (s150b) an estimate of the position of the NSS receiver in the local frame comprises interpolating at least part of the transformation offsets to the position of the NSS receiver.

20. Method according to any one of claims 14 to 19, wherein the distribution of the points in the region is not uniform in that there is at least a first sub-region of the region in which the average distance between adjacent points is greater than in a second sub-region of the region.

21. System (1000) for providing geodetic datum transformation information applicable to a region of the Earth, the geodetic datum transformation information being suitable for use by at least one of: a navigation satellite system, hereinafter abbreviated as "NSS", receiver and a processing entity capable of receiving data from the NSS receiver, the system (1000) being configured for at least one of following parts I and II, wherein

- part I comprises:

generating

two- or three-dimensional similarity transformation parameters for a geodetic transformation from a first reference frame, hereinafter referred to as "global frame", to a second reference frame, hereinafter referred to as "local frame", and,
for each of a plurality of reference stations in the region, post-fit transformation residuals applicable to the reference station,

based on coordinates, in the global frame, of the reference stations and on coordinates, in the local frame, of the reference stations; and
sending the similarity transformation parameters and, for each of a plurality of points, hereinafter referred to as "output points", of the region, residuals, hereinafter referred to as "output residuals", applicable to the output point, wherein

an output residual is either one of the generated post-fit transformation residuals or is derived from generated post-fit transformation residuals applicable to at least two of the reference stations; and
the distribution of the output points in the region depends on the distribution of the reference stations in the region; and

- part II comprises:

generating, for each of a plurality of reference stations in the region, at least one transformation offset applicable to the reference station, for a geodetic transformation from a first reference frame, hereinafter referred to as "global frame", to a second reference frame, hereinafter referred to as "local frame", based on coordinates, in the global frame, of the reference stations and on coordinates, in the local frame, of the reference stations; and
sending, for each of a plurality of points, hereinafter referred to as "output points", of the region, offsets, hereinafter referred to as "output offsets", wherein

an output offset is either one of the generated transformation offsets or is derived from generated transformation offsets applicable to at least two of the reference stations; and
the distribution of the output points in the region depends on the distribution of the reference stations in the region.

22. System (2000) comprising at least one of a navigation satellite system, hereinafter abbreviated as "NSS", receiver and a processing entity capable of receiving data from the NSS receiver, the system (2000) being for receiving and processing geodetic datum transformation information applicable to a region of the Earth, and the system (2000) being configured for at least one of following parts I and II, wherein

    - part I comprises:

        receiving two- or three-dimensional similarity transformation parameters for a geodetic transformation from a first reference frame, hereinafter referred to as "global frame", to a second reference frame, hereinafter referred to as "local frame", and, for each of a plurality of points in the region, post-fit transformation residuals applicable to the point, wherein the distribution of the points in the region is not uniform;
        estimating a position of the NSS receiver in the global frame; and
        obtaining an estimate of the position of the NSS receiver in the local frame based on the similarity transformation parameters, on at least part of the post-fit transformation residuals, and on the estimated position of the NSS receiver in the global frame; and

    - part II comprises:

        receiving, for each of a plurality of points in the region, at least one transformation offset for a geodetic transformation from a first reference frame, hereinafter referred to as "global frame", to a second reference frame, hereinafter referred to as "local frame", wherein the distribution of the points in the region is not uniform;
        estimating a position of the NSS receiver in the global frame; and
        obtaining an estimate of the position of the NSS receiver in the local frame based on at least part of the transformation offsets, and on the estimated position of the NSS receiver in the global frame.

23. Vehicle comprising a system (2000) according to claim 22, the vehicle preferably being at least one of: a motor vehicle, an agricultural equipment, an agricultural tractor, a combine harvester, a crop sprayer, a forestry equipment, a construction equipment, a truck, a bus, a train, a motorcycle, an autonomous vehicle, a self-driving vehicle, a driverless vehicle, a robotic vehicle, a highly automated vehicle, an aircraft, and an unmanned aerial vehicle.

24. Mobile device comprising a system (2000) according to claim 22, the mobile device preferably being at least one of: a mobile phone, a smartphone, and a laptop.

25. Computer program or set of computer programs comprising computer-readable instructions configured, when executed on a computer or set of computers, to cause the computer or set of computers to carry out a method according to any one of claims 1 to 20.

26. Computer program product or storage mediums comprising a computer program or set of computer programs according to claim 25.

s10a

generating 2D or 3D similarity transformation parameters for a geodetic transformation from a global frame to a local frame and, for each of a plurality of reference stations in the region, post-fit transformation residuals applicable to the reference station

s20a

sending the similarity transformation parameters and, for each of a plurality of output points of the region, output residuals applicable to the output point

Fig. 1

s10b

generating, for each of a plurality of reference stations in the region, transformation offset(s) applicable to the reference station, for a geodetic transformation from a global frame to a local frame

s20b

sending, for each of a plurality of output points of the region, output offsets

Fig. 2

s130a — receiving 2D or 3D similarity transformation parameters for a geodetic transformation from a global frame to a local frame and, for each of a plurality of points in the region, post-fit transformation residuals applicable to the point

s140a — estimating a position of the NSS receiver in the global frame

s150a — obtaining an estimate of the position of the NSS receiver in the local frame based on the similarity transformation parameters, on at least part of the post-fit transformation residuals, and on the estimated position of the NSS receiver in the global frame

Fig. 3

s130b — | receiving, for each of a plurality of points in the region, transformation offset(s) for a geodetic transformation from a global frame to a local frame |

s140b — | estimating a position of the NSS receiver in the global frame |

s150b — | obtaining an estimate of the position of the NSS receiver in the local frame based on at least part of the transformation offsets, and on the estimated position of the NSS receiver in the global frame |

Fig. 4

Code-chain of occupied cells: "0010 0001 0100"
Value-chain: 6

Fig. 5

Fig. 6a      Fig. 6b      Fig. 6c

Fig. 6d

Fig. 6e

Fig. 7

Fig. 8

Code-chain of occupied cells: "0111 0010 0010 0001 0100 0101 1000 1000"

Value-chain: 5667

Fig. 9

Fig. 10

Fig. 11a

Fig. 11b

Fig. 12a

Fig. 12b

Local datum transformation residuals (horizontal) @ German VRS stations

Fig. 13

Fig. 14

s10a

generating 2D or 3D similarity transformation parameters for a geodetic transformation from a global frame to a local frame and, for each of a plurality of reference stations in the region, post-fit transformation residuals applicable to the reference station

s20a

sending the similarity transformation parameters and, for each of a plurality of output points of the region, output residuals applicable to the output point

s22a

sending a set of quality indicators

Fig. 15

s10b

generating, for each of a plurality of reference stations in the region, transformation offset(s) applicable to the reference station, for a geodetic transformation from a global frame to a local frame

s20b

sending, for each of a plurality of output points of the region, output offsets

s22b

sending a set of quality indicators

Fig. 16

for each reference station ("selected reference station")

s102 — generating test transformation parameters

s104 — applying test transformation parameters to selected reference station

s106 — computing post-fit test transformation residual

s108 — determining summarizing measure of computed post-fit test transformation residuals

s110 — generating set of quality indicators based on the summarizing measure

Fig. 17

1000

1010 —

generating unit

1020 —

sending unit

Fig. 18

2000

2030 —

receiving unit

2040 —

estimating unit (for
estimating a position of
the NSS receiver in the
global frame)

2050 —

obtaining unit (for
obtaining an estimate of
the position of the NSS
receiver in the local frame)

Fig. 19

**Europäisches Patentamt**
**European Patent Office**
**Office européen des brevets**

# EUROPEAN SEARCH REPORT

Application Number

EP 23 18 2582

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 109 884 676 B (THE THIRD LAND SURVEY TEAM OF THE MINI OF NATURAL RESOURCES) 5 January 2021 (2021-01-05) | 1-6, 8-19, 21-26 | INV. G01S19/07 G01C15/00 |
| A | * the whole document * | 7,20 | ADD. G01S19/03 |

TECHNICAL FIELDS
SEARCHED     (IPC)

G01S
G01C

The present search report has been drawn up for all claims

| Place of search | Date of completion of the search | Examiner |
|---|---|---|
| Munich | 20 December 2023 | Haugg, Sabine |

EPO FORM 1503 03.82 (P04C01)

## ANNEX TO THE EUROPEAN SEARCH REPORT
## ON EUROPEAN PATENT APPLICATION NO.

**EP 23 18 2582**

This annex lists the patent family members relating to the patent documents cited in the above-mentioned European search report.
The members are as contained in the European Patent Office EDP file on
The European Patent Office is in no way liable for these particulars which are merely given for the purpose of information.

**20-12-2023**

| Patent document cited in search report | Publication date | Patent family member(s) | Publication date |
|---|---|---|---|
| CN 109884676 B | 05-01-2021 | NONE | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3035080 A1

- EP 3130943 A1

**Non-patent literature cited in the description**

- *RTCM standard 10403.3 differential GNSS (global navigation satellite systems) services-version 3*, 2016, 104
- CMRx: A new correction format from Trimble''. White paper. Trimble Navigation Ltd, June 2009
- **JAN VAN SICKLE** ; **JOHN A. DUTTON**. Two Types of Observables I GEOG 862: GPS and GNSS for Geospatial Professionals. e-Education Institute, College of Earth and Mineral Sciences, The Pennsylvania State University, 08 November 2021

- *Terrestrial Reference System*, 19 May 2023, https://itrf.ign.fr/en/background/trs-trf
- **ALTAMIMI et al.** ITRF2014 plate motion model. *Geophys. J. Int.*, 2017, vol. 209-3, 1906-1912, https://doi.org/10.1093/gji/ggx136
- Arbeitsgemeinschaft der Vermessungsverwaltungen der Länder der Bundesrepublik Deutschland (AdV). *Richtlinie für den einheitlichen integrierten geodätischen Raumbezug des amtlichen Vermessungswesens in der Bundesrepublik Deutschland, Version 3.0*, 2016